(19) Europäisches Patentamt
European Patent Office
Office européen des brevets

(11) EP 3 343 247 A1

(12) DEMANDE DE BREVET EUROPEEN

(43) Date de publication:
04.07.2018  Bulletin 2018/27

(51) Int Cl.:
G01S 19/07 (2010.01)

(21) Numéro de dépôt: 17205745.7

(22) Date de dépôt: 06.12.2017

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
MA MD TN

(30) Priorité: 29.12.2016  FR 1601897

(71) Demandeur: Thales
92400 Courbevoie (FR)

(72) Inventeurs:
• HADDAD, Franck
31100 TOULOUSE (FR)
• AUTHIE, Thierry
31100 TOULOUSE (FR)
• TRILLES, Sébastien
31100 TOULOUSE (FR)

(74) Mandataire: Tanguy, Yannick et al
Marks & Clerk France
Conseils en Propriete Industrielle
Immeuble Visium
22, avenue Aristide Briand
94117 Arcueil Cedex (FR)

(54) PROCEDE D'AJUSTEMENT OPTIMAL DE BORNES D'ERREURS GIVE OU DE CALCUL OPTIMAL DES VARIANCES DE RESIDUS DE POINTS IGP D'UNE GRILLE IONOSPHERIQUE DE CORRECTION D'UN SYSTEME SBAS ET SYSTEME SBAS DE MISE EN OEUVRE DUDIT PROCEDE

(57)     Un procédé d'ajustement optimal de bornes d'erreurs de correction ionosphérique GIVE et/ou un procédé de calcul de variances de résidus de points IGP d'une grille de correction ionosphérique d'un système SBAS comprennent chacun une étape d'interpolation inverse (220) mise en oeuvre sur un ensemble de points de percement IPPi d'observation.

Dans le procédé d'ajustement optimal des GIVE, l'étape d'interpolation inverse (220) dissémine pour chaque point de percement d'observation IPPi concerné un incrément de variance $\Delta_{UIVE_i}^2$ sur les points IGP de la maille dudit IPPi en utilisant une méthode des moindres carrés.

Dans le calcul des variances de résidus, l'étape d'interpolation inverse dissémine pour chaque point de percement d'observation IPPi concerné un résidu Resf sur les points IGP de la maille dudit IPPi en utilisant une méthode des moindres carrés

FIG.7

**Description**

La présente invention concerne un premier procédé d'ajustement optimal de bornes d'erreurs des estimations des retards ionosphériques, appelés GIVE (en anglais « Grid Ionospheric Vertical Error »), participant à assurer l'intégrité des services de navigation aéronautique critiques (en anglais « Safety of Life), fournie par un système d'augmentation spatial (en anglais « Satellite Based Augmentation System »). Ces corrections ainsi que leurs bornes d'erreurs associées sont élaborées pour des points, appelés IGP, d'une grille ionosphérique de correction du système SBAS.

L'invention concerne également un deuxième procédé de calcul optimal des écarts-type appelés $\sigma_{MOPS}$, permettant de modéliser l'erreur d'interpolation, réalisée entre les IGP et le point de percement du signal reçu par l'utilisateur, et l'erreur de la fonction de rabattement du délai vertical (en anglais « vertical delay ») vers le délai oblique (en anglais « slant delay »), lesdits écarts-type $\sigma_{MOPS}$ intervenant dans le calcul des GIVE finaux, et étant associées aux corrections d'erreur ionosphérique élaborées pour des points IGP d'une grille ionosphérique de correction d'un système SBAS pour assurer l'intégrité d'un service GNSS.

L'invention concerne également un système SBAS d'augmentation à base de satellite(s) configuré pour la mise en oeuvre du premier procédé et/ou du deuxième procédé de l'invention.

Un système SBAS d'augmentation à base de satellite(s), par exemple le système EGNOS (en anglais European Geostationary Navigation Overlay Service), est un système destiné à augmenter les performances d'un système global de navigation par satellites GNSS, par exemple le système GPS (en anglais « Global Positioning System »), en fournissant une précision améliorée et en garantissant un niveau d'intégrité rendant l'utilisation du système GPS compatible des opérations aériennes.

De manière connue, les corrections et les bornes d'erreurs associées à cette utilisation, sont élaborées par des centres de calcul, faisant partie du système SBAS et utilisant des données récupérées à partir de récepteurs GNSS ou de stations spécifiques déployés de manière optimisée dans la zone de service à augmenter, ces stations étant appelées des stations RIMS (en anglais « Ranging and Integrity Monitoring Station ») dans le cas d'un système de type EGNOS (en anglais « European Geostationary Navigation Overlay Services »).

Le système SBAS élabore des corrections permettant de compenser les principales sources d'erreur du positionnement GPS à savoir :

•- la correction de l'orbite et de l'horloge des satellites augmentés ;
•- et également la correction de l'erreur ionosphérique liée au retard du signal GPS causé par la traversée dudit signal dans l'ionosphère.

L'ensemble des corrections et de leurs bornes d'erreur associées sont envoyées aux utilisateurs, plus précisément les récepteurs GNSS embarqués des terminaux utilisateurs, par l'intermédiaire de satellites géostationnaires émettant des signaux standardisés qui pourront ensuite, être décodés et utilisés par les utilisateurs équipés pour l'augmentation SBAS. Généralement, un utilisateur équipé pour l'augmentation SBAS dispose d'un récepteur GPS spécifique, capable de traquer et décoder les messages des satellites géostationnaires SBAS, conformément aux normes définis par le standard applicable RTCA-DO229, toutes versions comprises jusqu'à la version E actuelle, et le standard ICAO SARPs, toutes versions comprises jusqu'à la 6$^{ième}$ version actuelle.

Concernant les erreurs d'horloge et d'orbite, les éphémérides directement reçues au travers des signaux GPS sont généralement de très bonne qualité et ne nécessitent pas forcément de correction. Cependant, c'est surtout l'intégrité garantie sur ces données qui ne suffit pas à l'aviation civile. Le système SBAS doit donc observer, corriger et surtout garantir avec le niveau d'intégrité requis les informations d'orbite et d'horloge qui seront envoyées aux utilisateurs finaux. Le système SBAS a donc en particulier la capacité de détecter les erreurs et de les réparer, ou si cela ne s'avère pas possible d'avertir l'utilisateur dans un temps suffisamment court de l'existence de ces erreurs non réparées, pour garantir sa sécurité.

Concernant le retard ionosphérique, le problème est tout autre. En effet, non corrigées, ces erreurs peuvent peser plusieurs dizaines de mètres sur l'erreur de positionnement GPS. Bien que les signaux envoyés par les satellites GPS contiennent un modèle de correction de ces retards en fonction de l'heure et de la position des points de percement IPP (en anglais Ionospheric Pierce Point) des signaux reçus par l'utilisateur, ce modèle s'avère peu fiable, en particulier lorsque l'activité électromagnétique de l'ionosphère est forte et instable, notamment dans les zones équatoriales ou polaires. Ce modèle portant, le nom de son inventeur Klobuchar, ne peut donc servir pour garantir l'intégrité que pour des opérations aériennes ne nécessitant que peu de précision,». Pour les approches précises lesdites procédures étant dénommées classiquement en anglais « Non Precision Approach / En route en vue de l'atterrissage d'un avion, ce modèle est donc insuffisant compte-tenu du niveau de précision requis.

Le système SBAS doit donc élaborer une estimation de ces retards ou délais au-dessus de la zone de couverture en définissant un modèle plus précis et actuel du contenu électronique de l'ionosphère en terme de retard de traversée de l'ionosphère des signaux GNSS. Ce modèle, plus précis et représentatif en temps réel des retard ionosphériques, est réalisé au travers d'un maillage ou réseau discret virtuel de points appelés IGP (en anglais « Ionospheric Grid Point »), situés à 350 km d'altitude, l'ionosphère étant assimilée à une couche mince concentrant le principal de sa densité électronique à cette altitude.

Ces délais de traversée calculés sur les IGPs sont établis pour des signaux verticaux, et sont interpolés de façon normalisée par le terminal utilisateur en fonction de la localisation de ses IPP par rapport aux différents points IGP du maillage. Une fonction de rabattement, standardisée également, est ensuite utilisée en fonction de l'élévation par rapport à la sphère terrestre des différentes lignes de vues des satellites visibles depuis l'antenne GNSS du terminal utilisateur pour assurer l'allongement du délai en fonction de l'obliquité des signaux traqués.

Les délais et leur borne d'erreur sur chacun des points IGP du maillage observables par le système SBAS sont calculés à partir des mesures bi-fréquence collectées par les stations de télémétrie et de contrôle d'intégrité réparties sur l'ensemble de la zone de couverture du système SBAS, lesdites stations étant dénommées RIMS dans le cas du système EGNOS et WRS (en anglais « Wide-area Reference Station ») dans le cas du système WAAS (en anglais « Wide area Augmentation System ») par exemple.

Un algorithme dédié réalise l'estimation des délais et fournit une première borne d'erreur simplifiée appelée « Basic GIVE » (en anglais « Basic Grid Ionospheric Vertical Error »). Un certain nombre de termes sont ensuite calculés et ajoutés afin de conférer à la borne d'erreur finale assurant l'intégrité, dénommé le GIVE (en anglais « Grid Ionospheric Vertical Error »), la confiance requise pour être conforme à la sécurité relative aux opérations aériennes précises.

D'après le standard du système GPS, le GIVE est déterminé suivant l'expression :

$$GIVE = 3,29 \times \sigma_{GIVE}$$

dans lequel $\sigma_{GIVE}^2$ désigne une variance corrigée de la variance fournie par le filtre estimateur du GIVD, désignée par $\sigma_{BASIC\_GIVE}^2$.

Ici et suivant un exemple d'algorithme dédié, la variance corrigée $\sigma_{GIVE}^2$ est calculée suivant l'expression :

$$\sigma_{GIVE}^2 = \sigma_{BASIC_{GIVE}}^2 + \sigma_{MOPS}^2 + \sigma_{GEOMETRY_{SCALE}}^2 + \sigma_{USER_{SMOOTHING}}^2 + \sigma_{DRIFT}^2$$

dans laquelle

$\sigma_{BASIC_{GIVE}}^2$ est la variance fournie par le filtre estimateur du GIVD,

$\sigma_{MOPS}^2$ est la variance des résidus obtenus par la différence entre l'UISD estimé à partir des IGP avec la méthode d'interpolation du système MOPS, et le STEC (« Slant Total Electron Content ») obtenu directement du point de mesure de la station considérée,

$\sigma_{GEOMETRY_{SCALE}}^2$ est une variance représentative de la qualité de l'observation du ciel autour de l'IGP à estimer,

$\sigma_{USER_{SMOOTHING}}^2$ est une variance de protection des utilisateurs contre un biais généré par le filtrage de leurs mesures en présence de gradient sur le délai ionosphérique,

$\sigma_{DRIFT}^2$ est une variance qui permet d'assurer le maintien de la protection offerte par le GIVE jusqu'au prochain rafraîchissement de celui-ci.

Une fois le GIVE final élaboré pour chaque IGP, il est vérifié de nouveau que lorsqu'on applique les corrections ionosphériques aux différents IPP mesurés par les stations RIMS que l'on compare par rapport à la valeur directement mesurée à leur niveau, les différences entre la valeur de délai ionosphérique mesuré à l'IPP et la valeur reconstruite par interpolation sont correctement couvertes par leur UIVE (User Ionospheric Vertical Error) associé, résultant de l'interpolation (selon la méthode d'interpolation imposée par le standard) des GIVE des IGP situés autour des IPP considérés. C'est sur ce point précis que se concentre le premier procédé de l'invention.

Avant de décrire le procédé actuel de vérification d'intégrité des informations de correction associées aux IGP, des définitions et des illustrations préliminaires d'un certain nombre de grandeurs utilisés par ledit procédé actuel sont décrites ci-dessous.

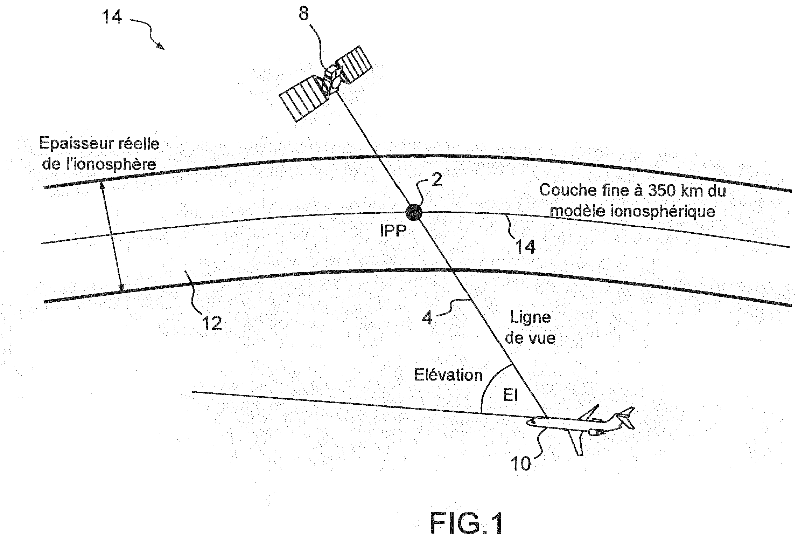

Suivant la Figure 1 un point de percement IPP, désigné par la référence numérique 2, correspond à l'intersection d'une ligne de vue 4 LoS (en anglais « Line of Sight ») entre un satellite GNSS 8, ici un satellite GPS, et un récepteur utilisateur 10 avec l'ionosphère 12, assimilée à une couche 14 infiniment mince par la norme RTCA-DO229, toutes versions comprises jusqu'à la version E actuelle, et la norme ICAO SARPs, et située à 350 km d'altitude. Le récepteur utilisateur 108, ici embarqué à bord d'un aéronef, et le satellite 8 GPS font partie d'un système 14 GNSS.

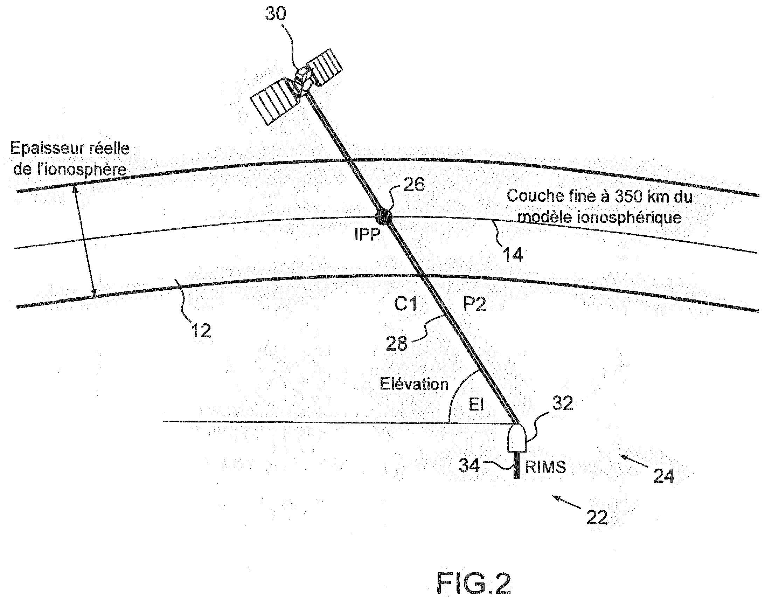

De la même façon qu'un récepteur utilisateur possède à un instant donné un IPP par ligne de vue du ou de chacun des satellites GNSS en visibilité, suivant la Figure 2 chaque station d'observation 22 RIMS d'un système SBAS 24 possède un nombre donné d'IPP mesurés sur une fenêtre temporelle donnée. Ici, sur la Figure 2, un seul point de percement d'observation IPP 26 à un instant donné est représenté comme l'intersection d'une ligne de vue 28 entre un satellite GPS 30 et un terminal récepteur 32 d'une station d'observation 34, faisant partie de l'ensemble des stations d'observations 22 du système SBAS 24, avec l'ionosphère 12, assimilée à la couche 14 infiniment mince.

Les mesures fournies par les stations d'observation RIMS 22 étant en bi-fréquence aux fréquences L1 (C/A) et L2 (P(Y)), contrairement aux terminaux utilisateurs qui ne disposent actuellement que de la fréquence L1 (C/A) pour les usages civils, le délai ionosphérique en chacun des IPP d'observation peut être calculé à partir de la différence faites sur les « pseudo-distances », désignées respectivement par C1 et P2, entre L1 et L2, après retranchement par estimation des biais inter-fréquences générés par le terminal récepteur GPS 32 de la RIMS 34 de la Figure 2, et par le satellite 30 également. Au niveau du satellite 30, le biais correspond à un biais de transmission entre les signaux de fréquences différentes. Au niveau récepteur, il s'agit d'un biais provoqué par la chaîne de traitement du terminal récepteur entre chaque fréquence.

La mesure du délai ionosphérique par cette méthode repose sur le fait que la vitesse de propagation d'un signal électromagnétique tel que le signal GPS dans l'ionosphère dépend de sa fréquence, ici notée f. Plus précisément, le délai ionosphérique, ici noté d, est au premier ordre proportionnel au contenu électronique du chemin parcouru STEC (en anglais « Slant Total Electronic Content ») et inversement proportionnel au carré de la fréquence, ce qui peut être formulé par l'expression : $d \sim \dfrac{STEC}{f^2}$ .

Pour information, la fréquence L2 n'est que partiellement utilisée par le système SBAS qui ne fait que traquer le signal en lui-même, car le contenu du signal porté par cette fréquence L2 est à usage militaire exclusif et donc inaccessible pour des utilisations civiles du fait de puissantes méthodes de cryptage qui y sont introduites. Cependant, pour la mesure du retard ionosphérique, cette utilisation est amplement suffisante.

Les avions civils ne sont pas quant à eux équipés de récepteurs capables de traquer L2 ne serait-ce que partiellement du fait de l'absence de standard encadrant son utilisation, et surtout du fait que L2 n'est pas une fréquence civile à la base.

Ainsi la différence des pseudo-distances est régie par la relation:

$$P2 - C1 = (\gamma - 1) \times STEC + IFB^{satellite} + IFB_{station} \qquad \text{(équation #1)}$$

avec:

•- $\gamma = \dfrac{f_{L1}{}^2}{f_{L2}{}^2}$ , le rapport des fréquences L1 et L2 permettant de ramener le délai ionosphérique à la fréquence de référence L1;

•- STEC, le délai ionosphérique de la ligne de vue réelle, donc fonction de l'élévation (en anglais Slant TEC, avec TEC "Total Electron Content") ;

•- IFB$^{satellite}$ et IFB$_{station}$ sont respectivement les biais inter-fréquence du satellite et du récepteur.

Ce calcul est répété pour toutes les lignes de vues de chaque RIMS déployée dans toute la zone de service du système SBAS. Ainsi on obtient un nombre important d'IPP de mesures situés aux alentours et dans des voisinages de tous les points de maillage IGP observables dans la zone de service sur lesquels le STEC est mesuré.

Puis, chaque délai ionosphérique de la ligne de vue réelle STEC est « redressé » à la verticale en devenant un VTEC (V pour vertical) suivant une relation du type :

$$STEC = F_{pp}.VTEC \qquad \text{(équation #2)}$$

dans laquelle F$_{pp}$ désigne une fonction de rabattement du délai ionosphérique en fonction de l'élévation de la ligne de vue.

On pourra noter ici que ce facteur vaut 1 quand l'élévation de la ligne de vue est à 90°, donc verticale. A cette étape du calcul, le choix de la loi de rabattement est libre. On n'utilise donc pas nécessairement la loi de rabattement définie dans le standard pour un terminal utilisateur dans le cadre du service de navigation. On peut définir la loi que l'on juge la plus efficace et la plus adaptée pour l'obtention du meilleur GIVD possible.

Ensuite, un algorithme est utilisé pour calculer un délai ionosphérique estimé sur chaque IGP, appelé alors délai vertical du réseau maillé ionosphérique GIVD (en anglais « Grid Ionosphere Vertical Delay »).

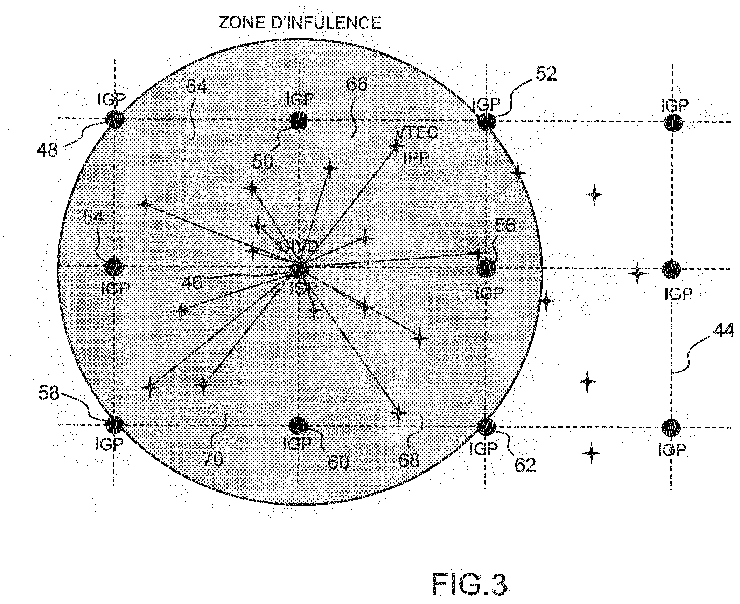

Suivant la Figure 3, un exemple de collecte de mesures, effectuées par une ou plusieurs station RIMS, en un ensemble ou nuage de points IPP contenus dans une zone d'influence ou voisinage 42 d'un IGP prédéterminé d'un réseau maillé ionosphérique 44, est illustré. Ici, le maillage illustré est un maillage de points IGP, défini par le standard RTCA-DO229, toutes versions comprises jusqu'à la version E actuelle, et le standard ICAO SARPs, avec des mailles de forme carrée. Dans cet exemple, le point IGP 46 dont la zone d'influence 42 est illustrée est entouré de huit points IGP immédiatement voisins 48, 50, 52, 54, 46, 58, 60, 62 et forme le point commun de quatre mailles adjacentes 64, 66, 66, 68 qui l'entourent et constituent l'essentiel de sa zone d'influence 42. Les points IPP d'observation, représentés par des étoiles et situés dans la zone d'influence 42 définie par un réglage dans l'algorithme, portent et sont associés chacun une mesure de VTEC. Ainsi, chaque IPP situé dans cette zone d'influence contribue à l'élaboration du GIVD de l'IGP considéré avec des poids variables selon la qualité de leur mesure et leur distance par rapport à l'IGP concerné.

Cette même opération est répétée sur tous les IGP de la zone de service du SBAS ayant suffisamment d'IPP dans leur zone d'influence pour estimer correctement une valeur de GIVD et un écart-type appelé Basic GIVE ou GIVE de départ.

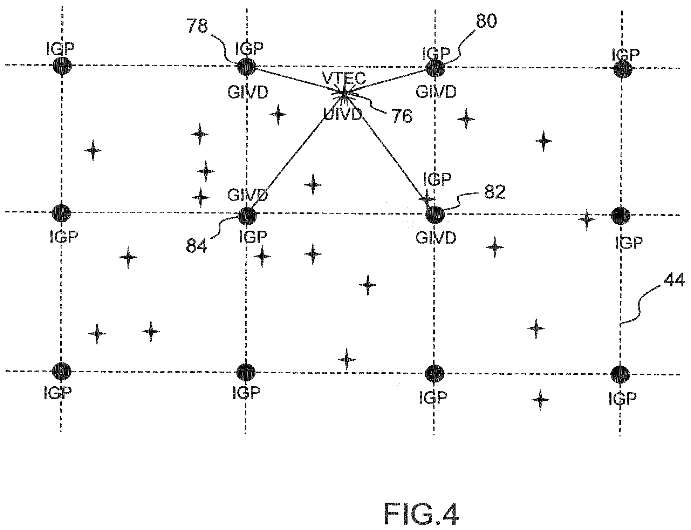

Une fois les GIVD obtenus pour chacun des IGP de la zone SBAS de service, suivant la Figure 4 on calcule l'UIVD (en anglais « User Ionospheric Vertical Delay » sur chaque IPP situé dans les facettes ou cellules ou mailles contenant l'IPP que l'on cherche à évaluer, par exemple l'IPP 76, en interpolant le GIVD des quatre IGP, ici désignés par 78, 80, 82, 84, définissant la facette dans laquelle l'interpolation peut être réalisée.

Il est rappelé que le standard du SBAS utilisé impose la loi d'interpolation qui utilise une méthode de transformation bilinéaire, pondérée en fonction de la distance des IGP intervenant par rapport à l'IPP.

Ainsi, l'UIVD obtenu de l'IPP considéré permet d'observer l'écart obtenu entre le délai issu directement de la mesure sur l'IPP et l'UIVD issu de l'estimation du GIVD des IGP voisins et de leur interpolation. Une fois l'UIVD obtenu, on le rabat avec la fonction de rabattement définie dans le standard pour obtenir l'UISD :

$$\mathrm{UISD} = \mathrm{F_{pp\,standard}} \cdot \mathrm{UIVD} \quad \text{(équation \#3)}$$

En effet, ici on se place dans les mêmes conditions qu'un utilisateur et on veut déterminer les erreurs qui vont être générées par l'utilisation de la loi d'interpolation et la fonction de rabattement standardisées.

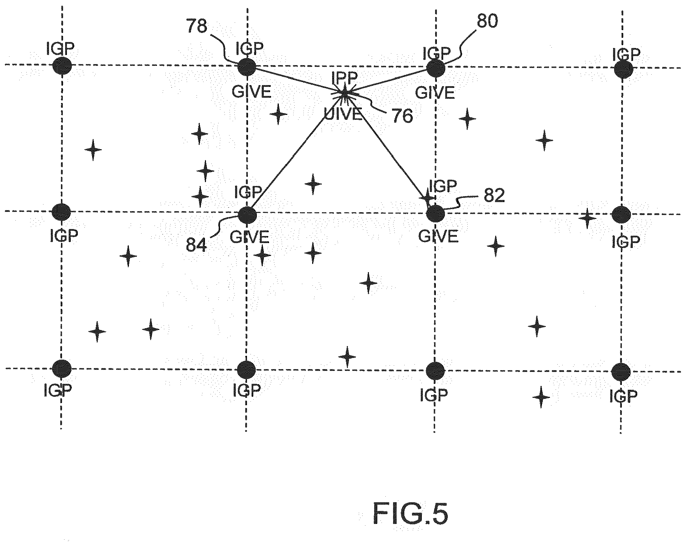

Pour les bornes d'erreur ionosphériques GIVE et suivant le Figure 5, exactement la même méthode est appliquée. Une fois interpolé au niveau de l'IPP 76, le GIVE devient UIVE (en anglais User Ionospheric Vertical Error).

Ensuite, comme pour l'UIVD, l'UIVE est rabattu selon l'élévation de la ligne de vue associée à l'IPP considéré pour obtenir l'UISE (en anglais User Ionospheric Slanted Error) :

$$\mathrm{UISE} = \mathrm{F_{pp\,standard}} \cdot \mathrm{UIVE} \quad \text{(équation \#4)}$$

Pour la vérification de l'intégrité garantie au niveau de l'utilisateur, on calcule les délais et les bornes sous leur forme verticale et non rabattue. L'erreur de rabattement sera intégrée à la mesure de l'IPP lors de sa conversion de STEC vers VTEC.

Suivant la méthode actuelle de vérification d'intégrité, on vérifie si le GIVE de chaque IGP suffit bien à borner l'erreur mesurée à partir de chaque IPP collecté par une station RIMS et ayant hérité de son couple UIVD et UIVE, obtenu par interpolation des GIVD et GIVE des IGP constituant la cellule dans laquelle l'interpolation à l'IPP a été réalisée.

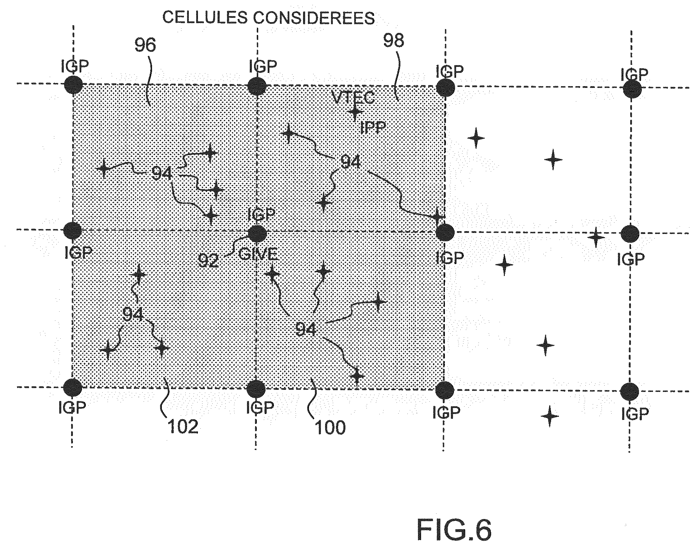

Pour cela, un IGP courant ayant été choisi parmi l'ensemble des IGP à parcourir, ici l'IGP désigné par la référence numérique 92, et suivant la Figure 6, on considère l'ensemble des IPP rattachés à au moins une cellule contenant l'IGP considéré dans leur interpolation.

Sur la Figure 6, l'ensemble 94 des IPP d'observation qui seront utilisés pour la vérification de l'intégrité GIVE assurée par le GIVE de l'IGP testé se trouvent à l'intérieur des quatre cellules 96, 98, 100, 102 représentées. L'un des IPP est d'ailleurs mis en évidence avec son VTEC mesuré. Il servira par la suite d'exemple dans l'application de la méthode de contrôle d'intégrité.

Pour chaque IPP, on calcule l'écart entre la valeur de délai ionosphérique vertical interpolée à son niveau, c'est-à-dire l'UIVD et la valeur de délai vertical directement mesuré VTEC sur cet IPP.

On rappelle que le VTEC est obtenu à partir du STEC mesuré que l'on multiplie par l'inverse de la fonction de rabattement :

$$VTEC_i = \frac{STEC_i}{F_{pp\ standard}}$$

(équation #6)

On vérifie alors que l'erreur mesurée est bien couverte par l'UIVE avec le niveau d'intégrité requis, c'est-à-dire par exemple $10^{-7}$, ce qui correspond à $5,33\ \sigma$ pour une distribution gaussienne, pour chaque IPPi, i désignant un indice de parcours des IPP contenus dans les cellules immédiatement voisines de l'IGP testé et définies au préalable.

L'UIVE est interprété dans le standard comme une variance avec un niveau de confiance ramené à 99.9%, c'est-à-dire le carré de $3.29\sigma$. Dans notre cas, nous considérons un écart-type, donc $1\sigma$. Nous l'appellerons donc : $\sigma_{UIVE}$.

Tout d'abord, une innovation de chaque IPPi désignée par stdUIVDerror$_i$, est calculée suivant l'expression :

$$stdUIVDerror_i = \frac{|VTEC_i - UIVD_i|}{\sqrt{\sigma_{VTEC_i}{}^2 + \sigma_{UIVE_i}{}^2}}$$

(équation #7)

avec :

- VTEC$_i$, le délai ionosphérique vertical mesuré à l'IPP i,
- UIVD$_i$, le délai ionosphérique vertical interpolé à partir des GIVD des IGP entourant l'IPP i ;
- $\sigma_{VTEC_i}$, l'écart-type du bruit de mesure à l'IPP i,
- $\sigma_{UIVE_i}$, l'écart-type issu des GIVE des IGP ayant participé à l'interpolation de l'UIVD de l'IPPi concerné.

Il est à remarquer que les valeurs C1 et P2 servant à l'élaboration de la mesure de VTECi à l'IPPi sont bruitées et généralement filtrées en amont. la prise en compte du bruit résiduel est donc nécessaire pour limiter les fausses alarmes.

Parmi l'ensemble des innovations calculées, on regarde si la valeur maximum des obtenue dépasse la valeur de seuil prédéterminée 5.33 qui correspond au niveau d'intégrité de $10^{-7}$ :

$$stdUIVDerror_i \geq 5.33$$

Si l'innovation est supérieure au seuil autorisé, alors un essai de réajustement du GIVE de l'IGP testé est entrepris en faisant gonfler (en anglais «inflate») le premier rapport $\frac{stdUIVDerror_i}{5.33}$ par un facteur de réajustement, par exemple ici égal à $1,1$ lorsqu'une marge de 10% est souhaitée, pour obtenir un deuxième rapport « gonflé », désigné par K et ayant pour expression :

$$K = \frac{stdUIVDerror_i}{5.33} \times 1.1$$

La variance du GIVE réajusté, désignée par $\sigma_{GIVE}(K)$, s'écrit donc :

$$\sigma_{GIVE}(K) = K.\sigma_{GIVE}$$

Cependant, la principale limitation de cette opération réside dans le fait qu'elle n'assure pas une correction parfaitement ajustée car on ne prend pas ici en compte les autres IGP ayant servi à l'obtention de l'UIVDi de l'IPPi considéré.

Afin d'éviter tout risque de non respect du niveau d'intégrité, lorsque la condition stdUIVDerror$_i$ > 5.33 est réalisée, condition ici associée au niveau d'intégrité de 99,99999%, soit un risque de $10^{-7}$, alors l'utilisation de l'IGP considéré est interdite sans essayer de corriger son GIVE.

Cela a pour conséquence de potentiellement réduire la capacité d'un terminal utilisateur à utiliser l'ensemble des satellites qui lui sont visibles pour réaliser, s'il s'agit d'un avion, son approche vers la piste d'atterrissage et donc d'accroître le risque d'empêcher le terminal utilisateur d'atteindre le niveau de service nécessaire pour effectuer une tâche prédéterminée, une approche précise dans le cas d'un avion.

De plus, si cet empêchement survient pendant une approche précise dans le cas d'un avion, ce dernier n'aura de choix alors que d'arrêter son approche. L'avion remet alors les gaz, s'éloigne de la piste et se met en attente au-dessus de l'aéroport en attendant que la tour de contrôle lui propose une autre procédure d'approche, par exemple une approche dite « non précise ». Cela pourrait conduire à une gestion plus complexe du trafic aérien au-dessus de la zone impactée.

Une première invention vise à remédier aux inconvénients décrits ci-dessus.

Le premier problème technique que résout la première invention est de proposer un procédé d'ajustement optimal des bornes d'erreurs de GIVE de points IGP d'une grille ionosphérique de correction d'une zone de service d'un système SBAS, et un système de mise en oeuvre dudit procédé, qui garantissent à la fois la tenue de l'exigence d'intégrité d'un service SBAS prédéterminé et l'utilisation d'un nombre maximal d'IGP ayant leur GIVE ajustés pour une meilleure disponibilité du service SBAS.

A cet effet, la première invention a pour premier objet un procédé d'ajustement optimal de bornes d'erreurs de correction GIVE d'un premier ensemble de points IGP d'une grille de correction ionosphérique d'une zone de service d'un système d'augmentation à base de satellites SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble. Le procédé d'ajustement optimal des bornes d'erreur comprend les étapes consistant à :

•- calculer par au moins un calculateur électronique, à partir d'informations prédéterminées de corrections d'erreurs ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, une innovation désignée par stdUIVDerror$_i$, suivant l'expression :

$$\text{stdUIVDerror}_i = \frac{|\text{VTEC}_i - \text{UIVD}_i|}{\sqrt{\sigma_{\text{VTEC}_i}{}^2 + \sigma_{\text{UIVE}_i}{}^2}}$$

dans laquelle :

•* VTEC$_i$ désigne le délai ionosphérique vertical mesuré à l'IPPi,
•* UIVD$_i$ désigne le délai ionosphérique vertical interpolé à partir des GIVDj des IGPj de la maille de rang m entourant l'IPPi concerné ;
•* $\sigma_{\text{VTEC}_i}$ désigne l'écart-type du bruit de mesure à l'IPPi,
•* $\sigma_{\text{UIVE}_i}$ désigne l'écart-type issu des GIVE des IGPj de la maille de rang m ayant participé à l'interpolation de l'UIVDi de l'IPPi concerné ; puis •- lorsque l'innovation de l'IPPi parcouru dans la maille actuelle de rang m est strictement supérieur à un seuil théorique *Max*Thd correspondant à niveau de confiance et d'intégrité prédéterminé requis par le service SBAS, calculer un incrément de variance $\Delta_{\text{UIVE}_i}{}^2$ qu'il faudrait rajouter au $\sigma_{\text{UIVE}_i}{}^2$ sur l'IPPi considéré pour qu'il recouvre le niveau d'intégrité requis suivant l'équation :

$$\Delta_{\text{UIVE}_i}{}^2 = \left(\beta + \sigma_{\text{UIVE}_i}{}^2\right) \times \left(K_{\text{fact}}{}^2 - 1\right)$$

dans laquelle :

•- $\sigma_{\text{UIVE}_i}$ désigne l'écart-type issu des GIVE des IGPj de la maille de rang m ayant participé à l'interpolation de l'UIVDi de l'IPPi concerné ;
•- $\beta$ et $K_{\text{fact}}{}^2$ désignent respectivement un premier terme et un deuxième terme,

Le premier terme $\beta$ étant déterminé selon l'équation:

$$\beta = \sigma_{\text{VTEC}_i}{}^2$$

où $VTEC_i$ désigne le délai ionosphérique vertical mesuré à l'IPPi considéré, et le deuxième terme $K_{fact}^2$ étant déterminé selon l'équation :

$$K_{fact}^2 = \frac{stdUIVDerror_i^2}{(SafMarg \times MaxThd)^2}$$

• SafMarg désignant la marge d'intégrité en pourcentage du seuil maximum toléré que l'on souhaite générer, supérieur à 0 et strictement inférieur à 1, et configurée en fonction d'une marge de garantie d'intégrité en valeur relative prédéterminée, notée X et exprimée en pourcentage, suivant l'expression : SafMarg = (1-X).

Le procédé d'ajustement optimal est caractérisé en ce qu'il comprend en outre les étapes consistant à, lorsque l'innovation de l'IPPi parcouru dans la maille actuelle de rang m est strictement supérieur à un seuil théorique *Max*Thd :

• - déterminer des valeurs d'incréments de variance $\Delta_{GIVE_k}^2$ à attribuer respectivement aux IGPk de la maille de l'IPPi considéré par une méthode d'interpolation inverse utilisant une méthode de Moindres Carrés de sorte à répartir l'incrément de variance $\Delta_{UIVE_i}^2$ de l'IPPi suivant la relation :

$$\Delta_{UIVE_i}^2 = \sum_{k=1}^{N_{IGP}} w_k . \Delta_{GIVE_k}^2$$

dans laquelle

• - $N_{IGP}$ est le nombre d'IGPs de la maille de forme prédéterminée utilisés par le calcul de l'UIVDi et UIVEi de l'IPPi considéré ;
• - k désigne un indice de numérotation dans la maille contenant l'IPPi des IGP de ladite maille,
• - $w_k$ désignent les poids respectifs des IGPk, k variant de 1 à $N_{IGP}$, calculés par application du standard GNSS suivant une fonction du standard GNSS qui dépend de la distance entre l'IPPi et l'IGPk, la somme des poids $w_k$ étant égale à un ; puis
• - pour chaque IGPk de la maille m à laquelle appartient l'IPPi considéré, mettre à jour la variance $\sigma_{GIVE_k}$ dudit IGPk

en remplaçant la valeur actuelle $\sigma_{GIVE_k}$ du GIVEk par une nouvelle valeur égale à $\sqrt{\sigma_{GIVE_k}^2 + \Delta_{GIVE_k}^2}$ .

Suivant des modes particuliers de réalisation, le procédé d'ajustement optimal des bornes d'erreurs de correction ionosphérique GIVE comprend l'une ou plusieurs des caractéristiques suivantes :

• - l'étape de détermination des valeurs d'incréments de variance $\Delta_{GIVE_k}^2$ à attribuer respectivement aux IGPk de la maille de l'IPPi considéré est mise en oeuvre par une méthode de Moindre Carré Classique dans laquelle un vecteur $Y_i$ de répartition du $\Delta_{UIVE_i}^2$ de l'IPPi considéré sur les IGPk associés est calculé suivant l'équation: $Y_i = H_i^t . (H_i . H_i^t)^{-1} . \Delta_{UIVE_i}^2$ dans laquelle :

• * $H_i = [w_1 \ w_2 \ ... \ W_{NIGP}]$ désigne un vecteur-ligne à $N_{IGP}$ composantes pour réaliser l'interpolation de l'IPPi considéré, chaque composante $W_k$, k variant de 1 à $N_{IGP}$, correspondant au poids d'un $IGP_k$ obtenu avec la méthode de calcul d'interpolation directe définie par le standard pour l'IPPi considéré ;

• * $Y_i = \begin{bmatrix} \Delta_{GIVE_1}^2 \\ \Delta_{GIVE_2}^2 \\ ... \\ \Delta_{GIVE_{NIGP}}^2 \end{bmatrix}$ désigne un vecteur-colonne à $N_{IGP}$ composantes de la répartition de l'incrément de

variance $\Delta_{UIVE_i}^2$ à répartir sur les $N_{IGP}$ IGPk lorsque la maille de l'IPPi considéré comporte $N_{IGP}$ IGPs, comme résultat de la résolution de l'équation ;
• * $\Delta_{UIVE_i}^2$ désigne l'incrément de variance à répartir ;

•- l'étape de détermination des valeurs d'incréments de variance $\Delta_{GIVE_k}{}^2$ à attribuer respectivement aux IGPk de la maille de l'IPPi considéré est mise en oeuvre par une méthode de moindre carré ajustée par un niveau de confiance 1-p dans laquelle un vecteur Yi de répartition du $\Delta_{UIVE_i}{}^2$ de l'IPPi considéré sur les IGPk associés est calculé suivant l'équation :

$$Yi = T_i^{CALSQ}.\,Hi^t.\,(Hi.\,Hi^t)^{-1}.\,\Delta_{UIVE_i}{}^2$$

dans laquelle :

•* $Yi = \begin{bmatrix} \Delta_{GIVE_1}{}^2 \\ \Delta_{GIVE_2}{}^2 \\ ... \\ \Delta_{GIVE_{NIGP}}{}^2 \end{bmatrix}$ désigne un vecteur-colonne à $N_{IGP}$ composantes de la répartition de l'incrément de

variance $\Delta_{UIVE_i}{}^2$ à répartir sur les $N_{IGP}$ IGPk lorsque la maille de l'IPPi considéré comporte $N_{IGP}$ IGP, comme résultat de la résolution de l'équation ;
•* $Hi = [w_1\ w_2 ... w_{NIGP}]$ désigne un vecteur-ligne à $N_{IGP}$ composantes pour réaliser l'interpolation de l'IPPi considéré, chaque composante $w_k$, k variant de 1 à $N_{IGP}$, correspondant au poids d'un $IGP_k$ obtenu avec la méthode de calcul d'interpolation directe définie par le standard pour l'IPPi considéré ; et
•* $T_i^{CALSQ}$ est une matrice carré d'inflation de rang $N_{IGP}$ définie par :

$$T_i^{CALSQ} = \frac{1}{G(p)^2} \begin{bmatrix} t_{v_1,\alpha}{}^2 & 0 & ... & 0 \\ 0 & t_{v_2,\alpha}{}^2 & ... & 0 \\ ... & ... & ... & ... \\ 0 & 0 & ... & t_{v_4,\alpha}{}^2 \end{bmatrix}$$

avec $t_{v_k,\alpha}$ désignant le facteur de Student associé l'IGPk de rang k fonction de $v_k$ le degré de liberté et fonction de la probabilité de confiance $\alpha$, ledit facteur de Student $t_{v_k,\alpha}$ permettant de borner une erreur avec un niveau de confiance (1-p) prédéterminé et requis par le service SBAS, la probabilité de confiance $\alpha$ étant lié au niveau de confiance par la relation $\alpha = 1 - \frac{1}{2}\cdot p$ , et le degré de liberté $v_k$ étant égal ici au nombre d'IPP ayant généré un résidu pour l'IGPk concerné moins un ; et $G(p)$ désignant la valeur obtenue lorsque l'hypothèse gaussienne est appliquée pour la même probabilité de confiance (1-p) que celle utilisée pour le calcul de $\alpha$, c'est-à-dire la limite du facteur de Student $t_{v_k,\alpha}$ lorsque le degré de liberté $v_k$ tend vers l'infini ; et
•* $\Delta_{UIVE_i}{}^2$ désigne l'incrément de variance à répartir ;

•- l'étape de détermination des valeurs d'incréments de variance $\Delta_{GIVE_k}{}^2$ à attribuer respectivement aux IGPk de la maille de l'IPPi considéré est mise en oeuvre par une méthode de moindre carré pondéré par un niveau de confiance niv_conf dans laquelle un vecteur Yi de répartition du $\Delta_{UIVE_i}{}^2$ de l'IPPi considéré sur les IGPk associés est calculé suivant l'équation : $Yi = Pi.\,Hi^t.\,(Hi.\,Pi.\,Hi^t)^{-1}.\,\Delta_{UIVE_i}{}^2$ dans laquelle :

•* $Yi = \begin{bmatrix} \Delta_{GIVE_1}{}^2 \\ \Delta_{GIVE_2}{}^2 \\ ... \\ \Delta_{GIVE_{NIGP}}{}^2 \end{bmatrix}$ désigne un vecteur-colonne à $N_{IGP}$ composantes de la répartition de l'incrément de

variance $\Delta_{UIVE_i}{}^2$ à répartir sur les $N_{IGP}$ IGPk lorsque la maille de l'IPPi considéré comporte $N_{IGP}$ IGP, comme résultat de la résolution de l'équation ;
•* $Hi = [w_1\ w_2 ... w_{NIGP}]$ désigne un vecteur-ligne à $N_{IGP}$ composantes pour réaliser l'interpolation de l'IPPi considéré, chaque composante $w_k$, k variant de 1 à $N_{IGP}$, correspondant au poids d'un $IGP_k$ obtenu avec la méthode de calcul d'interpolation directe définie par le standard pour l'IPPi considéré ; et
•* Pi est une matrice carré de pondération diagonale de rang $N_{IGP}$ définie par :

$$Pi = \begin{bmatrix} q_1 & 0 & ... & 0 \\ 0 & q_2 & ... & 0 \\ ... & ... & ... & ... \\ 0 & 0 & ... & q_{NIGP} \end{bmatrix}$$

avec $q_k = \left(\dfrac{t_{v_k,\alpha}}{G(p)}\right)^2$ associé à l'IGPk, k variant de 1 à $N_{IGP}$ $t_{v_k,\alpha}$ désignant le facteur de Student associé l'IGPk de rang k fonction de $v_k$ le degré de liberté et fonction de la probabilité de confiance $\alpha$, ledit facteur de Student $t_{v_k,\alpha}$ permettant de borner une erreur avec un niveau de confiance (1-p) prédéterminé et requis par le service SBAS, la probabilité de confiance $\alpha$ étant lié au niveau de confiance par la relation $\alpha = 1 - \dfrac{1}{2}.p$ ,

et le degré de liberté $v_k$ étant égal ici au nombre d'IPP ayant généré un résidu pour l'IGPk concerné moins un ; et $G(p)$ désignant la valeur obtenue lorsque l'hypothèse gaussienne est appliquée pour la même probabilité de confiance (1-p) que celle utilisée pour le calcul de $\alpha$, c'est à dire la limite du facteur de Student $t_{v_k,\alpha}$ lorsque le degré de liberté $v_k$ tend vers l'infini ; et

•* $\Delta_{UIVE_i}^2$ désigne l'incrément de variance à répartir ;

•- l'étape de détermination des valeurs d'incréments de variance $\Delta_{GIVE_k}^2$ à attribuer respectivement aux IGPk de la maille de l'IPPi considéré est mise en oeuvre par une méthode de moindre carré pondéré par un niveau de confiance 1-p dans laquelle un vecteur Yi de répartition du $\Delta_{UIVE_i}^2$ de l'IPPi considéré sur les IGPk associés est calculé suivant l'équation :

$$Yi = Hi^t.(Hi.Hi^t)^{-1}.\left[\Delta_{UIVE_i}^2.\left(\dfrac{t_{Nb_{IPP\,MOYEN},\alpha}}{G(p)}\right)^2\right]$$

dans laquelle :

•* $Yi = \begin{bmatrix} \Delta_{GIVE_1}^2 \\ \Delta_{GIVE_2}^2 \\ ... \\ \Delta_{GIVE_{NIGP}}^2 \end{bmatrix}$ désigne un vecteur-colonne à $N_{IGP}$ composantes de la répartition de l'incrément de

variance $\Delta_{UIVE_i}^2$ à répartir sur les $N_{IGP}$ IGPk lorsque la maille de l'IPPi considéré comporte $N_{IGP}$ IGP, comme résultat de la résolution de l'équation ;
•* Hi = [$w_1$ $w_2$ ... $w_{NIGP}$] désigne un vecteur-ligne à $N_{IGP}$ composantes pour réaliser l'interpolation de l'IPPi considéré, chaque composante $w_k$, k variant de 1 à $N_{IGP}$, correspondant au poids d'un $IGP_k$ obtenu avec la méthode de calcul d'interpolation directe définie par le standard pour l'IPPi considéré ; et
•* $t_{Nb_{IPP\,MOYEN},\alpha}$ désigne un facteur de Student fonction de la probabilité de confiance $\alpha$, ledit facteur de Student $t_{Nb_{IPP\,MOYEN},\alpha}$ permettant de borner une erreur avec un niveau de confiance (1-p) prédéterminé et requis par le service SBAS, la probabilité de confiance $\alpha$ étant lié au niveau de confiance par la relation $\alpha = 1 - \dfrac{1}{2}.p$ ,

et le degré de liberté $Nb_{IPP\,MOYEN}$ étant un nombre calculé à partir de la somme pondérée du nombre d'IPP au voisinage des IGPk ayant servis à l'obtention de l'UIVDi et UIVEi de l'IPPi testé, suivant la formule :

$$Nb_{IPP\,MOYEN} = \dfrac{\sum_{k=1}^{N_{IGP}} w_k.(Nb_{IPP\,k} - 1)}{\sum_{k=1}^{N_{IGP}} w_k}$$

avec :

•* $w_k$, le poids de l'IGPk obtenu par application de la méthode d'interpolation définie par le standard RTCA DO-229D sur l'IPPi concerné pour l'obtention de son UIVDi et UIVEi ;
•* $Nb_{IPP\ k}$ correspond au nombre d'IPP situé autour de l'IGPk dans le voisinage constitué de la réunion de toutes les cellules contenant cet IGPk ; et
•* $G(p)$ désignant la valeur obtenue lorsque l'hypothèse gaussienne est appliquée pour la même probabilité de confiance (1-p) que celle utilisée pour $\alpha$, c'est-à-dire la limite du facteur de Student $t_{v_k,\alpha}$ lorsque le degré de liberté $v_k$ tend vers l'infini ; et
•* $\Delta_{UIVE_i}^2$ désigne l'incrément de variance à répartir ;

•- la forme de chaque maille est une forme triangulaire et le nombre $N_{IGP}$ des IGP sommets de chaque maille et égale à 3, ou la forme de chaque maille est la forme d'un quadrilatère, de préférence comprise parmi les formes d'un rectangle, d'un carré et d'un losange, et le nombre $N_{IGP}$ des IGP sommets de chaque maille et égale à 4.

La première invention a également pour deuxième objet un système SBAS d'augmentation à base de satellites pour augmenter les performances d'un système global de navigation par satellites GNSS, le système SBAS comprenant des terminaux utilisateurs de service(s) SBAS, un ou plusieurs satellites d'augmentation des satellites du système GNSS et de diffusion de messages d'information aux terminaux utilisateurs, une ou plusieurs stations d'observation RIMS munis de récepteurs GNSS, et un ou plusieurs ou calculateurs. Le système SBAS est configuré pour ajuster de manière optimale des bornes d'erreurs de correction ionosphérique, appelés GIVE finaux, d'un premier ensemble de points IGP d'une grille de correction ionosphérique d'une zone de service du système SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble. Le système SBAS est caractérisé en ce que le ou les calculateurs électroniques sont configurés pour :

•- à partir d'informations prédéterminées de correction d'erreur ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, une innovation désignée par stdUIVDerror$_i$, suivant l'expression :

$$\text{stdUIVDerror}_i = \frac{|\text{VTEC}_i - \text{UIVD}_i|}{\sqrt{\sigma_{\text{VTEC}_i}^2 + \sigma_{\text{UIVE}_i}^2}}$$

dans laquelle :

•* $\text{VTEC}_i$ désigne le délai ionosphérique vertical mesuré à l'IPP i,
•* $\text{UIVD}_i$ désigne le délai ionosphérique vertical interpolé à partir des GIVDj des IGPj de la maille de rang m entourant l'IPPi concerné;
•* $\sigma_{\text{VTEC}_i}$ désigne l'écart-type du bruit de mesure à l'IPPi,
•* $\sigma_{\text{UIVE}_i}$ désigne l'écart-type issu des GIVE des IGPj de la maille de rang m ayant participé à l'interpolation de l'UIVDi de l'IPPi concerné ; puis
•- lorsque l'innovation de l'IPPi parcouru dans la maille actuelle de rang m est strictement supérieur à un seuil théorique *Max*Thd correspondant à un niveau de confiance ou d'intégrité (1-p) prédéterminé exigé par le service SBAS, calculer un incrément de variance $\Delta_{\text{UIVE}_i}^2$ qu'il faudrait rajouter au $\sigma_{\text{UIVE}_i}^2$ sur l'IPPi considéré pour qu'il recouvre le niveau d'intégrité requis suivant l'équation : $\Delta_{\text{UIVE}_i}^2 = (\beta + \sigma_{\text{UIVE}_i}^2) \times (K_{\text{fact}}^2 - 1)$ dans laquelle :

•* $\sigma_{\text{UIVE}_i}$ désigne l'écart-type issu des GIVE des IGPj de la maille de rang m ayant participé à l'interpolation de l'UIVDi de l'IPPi concerné ;
•* $\beta$ et $K_{\text{fact}}^2$ désignent respectivement un premier terme et un deuxième terme, le premier terme $\beta$ étant déterminé selon l'équation: $\beta = \sigma_{\text{VTEC}_i}^2$ où $\text{VTEC}_i$ désigne le délai ionosphérique vertical mesuré à l'IPPi considéré, etle deuxième terme $K_{\text{fact}}^2$ étant déterminé selon l'équation :

$$K_{\text{fact}}^2 = \frac{\text{stdUIVDerror}_i^2}{(\text{SafMarg} \times \text{MaxThd})^2}$$

•* *Saf*Marg désignant la marge d'intégrité en pourcentage du seuil maximum toléré que l'on souhaite générer, supérieure à 0 et strictement inférieure à 1, et configurée en fonction d'une marge de garantie d'intégrité en valeur relative prédéterminée, notée X et exprimée en pourcentage, suivant l'expression : SafMarg = (1 - X) ; puis

lorsque l'innovation de l'IPPi parcouru dans la maille actuelle de rang m est strictement supérieur à un seuil théorique *Max*Thd :

•- déterminer des valeurs d'incréments de variance $\Delta_{GIVE_k}{}^2$ à attribuer respectivement aux IGPk de la maille de l'IPPi considéré par une méthode d'interpolation inverse utilisant une méthode de Moindres Carrés de sorte à répartir l'incrément de variance $\Delta_{UIVE_i}{}^2$ de l'IPPi suivant la relation :

$$\Delta_{UIVE_i}{}^2 = \sum_{k=1}^{N_{IGP}} w_k . \Delta_{GIVE_k}{}^2$$

dans laquelle

•* $N_{IGP}$ est le nombre d'IGPs de la maille de forme prédéterminée utilisés par le calcul de l'UIVDi et UIVEi de l'IPPi considéré ;
•* k désigne un indice de numérotation dans la maille contenant l'IPPi des IGP de ladite maille,
•* $w_k$ désignent les poids respectifs des IGPk, k variant de 1 à $N_{IGP}$, calculés par application du standard GNSS suivant une fonction du standard GNSS qui dépend de la distance entre l'IPPi et l'IGPk, la somme des poids $w_k$ étant égale à un ; puis
•- pour chaque IGPK de la maille m à laquelle appartient l'IPPi considéré, mettre à jour la variance $GIVE_k$ dudit IGPk en remplaçant la valeur actuelle $\sigma_{GIVE_k}$ du GIVEk par une nouvelle valeur égale à

$$\sqrt{\sigma_{GIVE_k}{}^2 + \Delta_{GIVE_k}{}^2} .$$

Une deuxième invention concerne un deuxième procédé de calcul optimal des écarts-type appelés $\sigma_{MOPS}$ qui permettent de modéliser l'erreur d'interpolation, réalisée entre les IGP et le point de percement du signal reçu par l'utilisateur, ainsi que l'erreur de la fonction de rabattement du délai vertical (en anglais « vertical delay ») vers le délai oblique (en anglais « slant delay »), ladite fonction de rabattement dépendant de l'élévation satellite et de l'antenne du terminal GNSS). Les écarts-type $\sigma_{MOPS}$ interviennent dans le calcul des GIVE finaux et constituent un des termes ajoutés aux Basic GIVE pour l'obtention du GIVE final. Ainsi l'écart-type $\sigma_{MOPS}$ contribue t'il à conférer à la borne d'erreur finale assurant l'intégrité, c'est-à-dire le GIVE final, la confiance requise pour être conforme à la sécurité élevée de services SBAS prédéterminés comme ceux relatifs aux opérations aériennes précises. Ce terme est particulièrement important car il permet de recentrer l'erreur obtenue du fait des limitations induites par les imprécisions provoquées par les lois de calcul imposées par le standard.

Suivant la méthode actuelle de calcul des écarts-type appelés $\sigma_{MOPS}$, pour chaque point IGP un voisinage V de points de percement entourant l'IGP est défini. Pour chaque point de percement de mesure IPPi contenu dans ce voisinage V, un résidu noté $Res_i$, ramené à la verticale est calculé suivant l'équation :

$$Res_i = \frac{STEC_i - UISD_i}{F_{pp\ standard}}$$

(équation #8)

dans lequel :

•- STECi désigne le délai ionosphérique de la ligne de vue réelle, donc fonction de l'élévation ;
•- UISDi désigne le délai ionosphérique vertical interpolé suivant le standard à partir des GIVDk des IGPk de la maille ou cellule entourant l'IPPi ;
•- $F_{pp\ standard}$ désigne la fonction de rabattement standard du délai ionosphérique en fonction de l'élévation de la ligne de vue.

Le résidu $\text{Res}_i$ est ramené à la verticale en raison du fait que les délais et leur borne d'erreur au niveau des IGPk sont toujours formulés en vertical pour permettre à l'utilisateur de les adapter selon l'élévation de leurs propres lignes de vues.

Le résidu $\text{Res}_i$ du point de percement de mesure IPPi est ensuite pondéré suivant la qualité de sa mesure et la distance de l'IPPi par rapport à l'IGP considéré :

$$p_i = f(\sigma_{\text{VTEC}}{}^2, \text{Distance})$$

(équation #9)

Une fois le résidu $\text{Res}_i$ obtenu pour chaque IPPi situé dans le voisinage V contenant l'IGP considéré, une erreur moyenne, issue des différents résidus, est évaluée. Cette valeur d'erreur peut être calculée de plusieurs façons différentes, le but étant d'obtenir une valeur la plus représentative possible du biais généré par l'utilisation des méthodes d'interpolation et de rabattement définies par le standard afin de « recentrer » la borne d'erreur GIVE et garantir le niveau d'intégrité requis suivant une loi gaussienne centrée.

Dans le système EGNOS (en anglais « European Geostationary Navigation Service »), ce terme est un écart-type désigné et appelé $\sigma_{\text{MOPS}}$ (l'acronyme MOPS étant le standard définissant le système EGNOS).

Cette valeur d'écart-type ou de RMS (en anglais Root Mean Square) est calculée comme étant la racine carrée de la moyenne des carrés des résidus pondérés suivant l'équation :

$$\sigma_{\text{MOPS}} = \sqrt{\frac{1}{P} \times \sum_{i=1}^{\text{Nipp}} \frac{1}{p_i} \times \text{Res}_i{}^2}$$

(équation #10)

avec :

• P égal à la somme des poids normalisés suivant la formule : $P = \sum_{i=1}^{N_{ipp}} \frac{1}{p_i}$ où Nipp désigne le nombre de point de percement de mesure IPPi contenu dans le voisinage V entourant l'IGP considéré.

La principale limitation liée à cette méthode de calcul actuellement utilisée est la mise en place de la pondération, car chaque IPPi contribue différemment en fonction de la distance d'éloignement de l'IGP et de la qualité de la mesure. De plus, étant donné qu'au moins trois IGP, quatre dans le cas d'une maille rectangulaire ou carrée, sont en réalité intervenus dans le calcul de l'UISDi de chaque IPPi, de l'information a été perdue et on ne maîtrise pas parfaitement la quantité d'erreur que l'on injecte dans le résidu une fois pondéré.

Ensuite, le $\sigma_{\text{MOPS}}$ est dilaté suivant le nombre d'IPPi ayant contribué à son estimation par un facteur de Student permettant de définir l'indice de confiance de la valeur mesurée par rapport à une hypothèse gaussienne :

$$\sigma_{\text{MOPS}} = \left(\frac{t_{v_k, 0.99999995}}{5.33}\right) \times \sigma_{\text{MOPS}}$$

avec :

•- $t_{v_k, 0.99999995}$, le facteur de Student en fonction de $v_k$, le degré de liberté (ici c'est le nombre d'IPP) permettant de borner une erreur avec une probabilité de $10^{-7}$ requise par le standard aéronautique ; et
•- 5.33 qui est la valeur obtenue lorsque l'hypothèse gaussienne est appliquée, pour la même probabilité que celle définie ci-dessus, c'est à dire 0,9999999 de confiance.

La deuxième invention vise à remédier aux inconvénients précités, en particulier la principale limitation mentionnée.

Le deuxième problème technique que résout la deuxième invention est de proposer un procédé d'ajustement optimal des écarts-type $\sigma_{MOPS}$ de points IGP d'une grille ionosphérique de correction d'une zone de service d'un système SBAS, et un système de mise en oeuvre dudit procédé, qui soient indépendants de la configuration ou de la répartition spatiale des points de percement de mesure IPP situés autour des IGP d'interpolation.

A cet effet, la deuxième invention a pour troisième objet un procédé de calcul optimal des variances des résidus d'un premier ensemble de points IGP d'une grille de correction ionosphérique d'une zone de service d'un système SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble. Le procédé de calcul optimal des variances des résidus des IGP comprend les étapes consistant à :

•- calculer par au moins un calculateur électronique, à partir d'informations prédéterminées de correction d'erreur ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, un résidu, désigné par $Res_i$, ramené à la verticale, suivant l'équation :

$$Res_i = \frac{STEC_i - UISD_i}{F_{pp\ standard}}$$

dans laquelle : STECi désigne le délai ionosphérique de la ligne de vue réelle mesuré par une station d'observation et fonction de l'élévation de ladite ligne de vue, UISDi désigne le délai ionosphérique vertical interpolé suivant le standard du terminal utilisateur à partir des GIVDk des IGPk de la maille entourant l'IPPi , et $F_{pp\ standard}$ désigne la fonction de rabattement standard du délai ionosphérique en fonction de l'élévation de la ligne de vue, puis le carré du résidu . Le procédé de calcul optimal des variances des résidus des IGP est caractérisé en ce qu'il comprend en outre les étapes consistant à : pour chaque point de percement d'observation IPPi du deuxième ensemble,

•- déterminer des valeurs d'incréments de variance $\Delta_{Resk}{}^2$ à attribuer respectivement aux IGPk de la maille m de l'IPPi considéré par une méthode d'interpolation inverse utilisant une méthode de Moindres Carrés dans laquelle un vecteur Yi de répartition du carré du résidu $Res_i{}^2$ de l'IPPi considéré est calculé suivant l'équation $Yi = Hi^t.(Hi.Hi^t)^{-1}.Res_i{}^2$ dans laquelle :

•* $H = [w_1\ w_2\ ...\ w_{NIGP}]$ désigne un vecteur-ligne à $N_{IGP}$ composantes pour réaliser l'interpolation de l'IPPi considéré, chaque composante $w_k$, k variant de 1 à $N_{IGP}$, correspondant au poids d'un $IGP_k$ obtenu avec la méthode de calcul d'interpolation directe définie par le standard pour l'IPPi considéré ;

•* $Yi = \begin{bmatrix} \Delta_{Res1}{}^2 \\ \Delta_{Res2}{}^2 \\ ... \\ \Delta_{ResNIGP}{}^2 \end{bmatrix}$ désigne un vecteur-colonne à $N_{IGP}$ composantes de la répartition du carré du résidu

$Res_i{}^2$ à répartir sur les $N_{IGP}$ IGPk lorsque la maille de l'IPPi considéré comporte $N_{IGP}$ IGP, comme résultat de la résolution de l'équation ;

•* $Res_i^2$ désigne le carré du résidu à répartir, puis

•- déterminer un coefficient de pondération pi comme inverse d'un poids, ce coefficient de pondération étant représentatif de la qualité de la mesure du STECi redressé en VTECi par la division avec la fonction de rabattement de l'IPPi considéré, et exprimé suivant la formule suivante

$$p_i = \frac{\sigma_{VTEC_i}{}^2}{\sigma_{VTEC\ NOMINAL}{}^2}$$

dans laquelle

•* $\sigma_{VTEC_i}{}^2$ désigne le bruit de mesure de la pseudo-distance mesuré par le terminal de mesure pour l'IPPi considéré, et

•* $\sigma_{VTEC_i\ NOMINAL}{}^2$ désigne un bruit de mesure nominal de référence du terminal de mesure ;

•- ensuite, après avoir calculé tous les Yi et pi correspondant au premier ensemble des points de percement IPPi observé, pour chaque IGP, calculer une variance de résidu non dilaté suivant l'équation :

$$\sigma_{MOPS} = \sqrt{\frac{1}{Ps} \times \sum_{i=1}^{Nipp} \frac{1}{p_i} \times \Delta_{Res_{ipp\,i}}^{\ 2}}$$

avec :

•* Ps, la somme des poids normalisés $1/p_i$ de chaque résidu disponibles pour l'IGP considéré suivant :

$$Ps = \sum_{i=1}^{N_{ipp}} \frac{1}{p_i}$$

•* $N_{ipp}$ étant le nombre des IPP ayant généré un résidu pour l'IGP concerné,
•* $\Delta_{Res_{ipp\,i}}^{\ 2}$ le résidu interpolé en inverse à l'IGP considéré pour l'IPPi faisant partie des IPP ayant généré un résidu pour l'IGP concerné.

Suivant des modes particuliers de réalisation, le procédé de calcul optimal des variances des résidus d'un premier ensemble de points IGP d'une grille de correction ionosphérique d'une zone de service d'un système SBAS comprend l'une ou plusieurs des caractéristiques suivantes :

•- le coefficient de pondération $p_i$ est modulé par l'inverse du poids $w_i$ de l'IPPi suivant l'IGP tel que défini par le standard MOPS DO-229 et s'écrit suivant l'expression : $p_i = \frac{1}{w_i} \times \frac{\sigma_{VTEC_i}^{\ 2}}{\sigma_{VTEC\,NOMINAL}^{\ 2}}$ , et l'écart-type $\sigma_{MOPS}$ de l'IGP considéré est calculé suivant l'expression

$$\sigma_{MOPS} = \sqrt{(K.P.K^t)^{-1}.K.P.X^t}$$

dans laquelle :

•* K désigne le vecteur unitaire ligne de dimension Nipp : K = [1 1 ... 1],

•* P désigne la matrice diagonale des poids $P = \begin{bmatrix} \frac{1}{p_1} & \cdots & 0 \\ \vdots & \ddots & \vdots \\ 0 & \cdots & \frac{1}{p_{Nipp}} \end{bmatrix}$, et

•* X désigne le vecteur colonne des résidus : : $X = \begin{bmatrix} \Delta_{Res_1}^{\ 2} \\ \vdots \\ \Delta_{Res_{Nipp}}^{\ 2} \end{bmatrix}$ ;

•- le coefficient de pondération $p_i$ est modulé par l'inverse du poids $w_{i\,center\,norm}$ de l'IPPi suivant l'IGP l'expression :

$$p_i = \frac{1}{w_i\,center\,norm} \times \frac{\sigma_{VTEC_i}^{\ 2}}{\sigma_{VTEC\,NOMINAL}^{\ 2}}$$

dans laquelle le poids $w_{i\,center\,norm}$ est calculé selon l'équation :

Si $w_i$ = 0, alors l'IPP n'est pas utilisé pour le calcul du $\sigma_{MOPS}$ de l'IGP considéré

Si $0 < w_i < \frac{1}{N_{iGP}}$, alors $w_{i\,center\,norm}$ = $w_i$

Sinon, $w_{i\,center\,norm} = 1 - \frac{w_{i\,center\,ini}}{\sum_{i=1}^{N_{IGP}} w_{i\,center\,ini}}$ , $N_{IGP}$ correspondant au nombre d'IGP ayant servi dans l'interpolation du délai ionosphérique à l'IPPi et le terme $w_{i\,center\,ini}$ s'écrivant $w_{i\,center\,ini} = \left| w_i - \frac{1}{N_{IGP}} \right|$, le

poids $w_i$ étant défini par la norme MOPS DO-229, et l'écart-type $\sigma_{MOPS}$ de l'IGP considéré est calculé suivant l'expression

$$\sigma_{MOPS} = \sqrt{(K.P.K^t)^{-1}.K.P.X^t}$$

dans laquelle :

•* K désigne le vecteur unitaire ligne de dimension Nipp : $K = [1\ 1\ ...\ 1]$,

•* P désigne la matrice diagonale des poids $P = \begin{bmatrix} \frac{1}{p_1} & \cdots & 0 \\ \vdots & \ddots & \vdots \\ 0 & \cdots & \frac{1}{p_{Nipp}} \end{bmatrix}$, et

•* X désigne le vecteur colonne des résidus : $X = \begin{bmatrix} \Delta_{Res_1}^2 \\ \vdots \\ \Delta_{Res_{Nipp}}^2 \end{bmatrix}$

•- le procédé de calcul optimal des écarts-type comprend une étape supplémentaire consistant à, pour chaque IGPk du deuxième ensemble, calculer une variance de résidu dilaté $\sigma_{MOPS}^d$ à partir de la variance de résidu

non dilaté $\sigma_{MOPS}$ suivant l'équation: $\sigma_{MOPS}^d = \left( \frac{t_{v_k,\alpha}}{G(p)} \right).\sigma_{MOPS}$ avec $d_k = \left( \frac{t_{v_k,\alpha}}{G(p)} \right)$ le coefficient de dilatation associé à l'IGPk, k variant de 1 à $N_{IGP}$,

•* $t_{v_k,\alpha}$ désignant le facteur de Student associé l'IGPk de rang k fonction de $v_k$ le degré de liberté et fonction de la probabilité de confiance $\alpha$, ledit facteur de Student $t_{v_k,\alpha}$ permettant de borner une erreur avec un niveau de confiance (1-p) prédéterminé et requis par le service SBAS, la probabilité de confiance $\alpha$ étant lié au niveau de confiance par

la relation $\alpha = 1 - \frac{1}{2}.p$ , et le degré de liberté $v_k$ étant égal ici au nombre d'IPP ayant généré un résidu pour l'IGPk concerné moins un ; et

•* G(p) désignant la valeur obtenue lorsque l'hypothèse gaussienne est appliquée pour la même probabilité de confiance $\alpha$, c'est à dire la limite du facteur de Student $t_{v_k,\alpha}$ lorsque le degré de liberté $v_k$ tend vers l'infini.

L'invention a également pour quatrième objet un procédé de calcul optimal simplifié des variances $\sigma_{MOPS}^2$ des résidus d'un premier ensemble de points IGP d'une grille de correction ionosphérique d'une zone de service d'un système SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble. Le procédé de calcul optimal des variances des résidus des IGP comprend les étapes consistant à :

•- calculer par au moins un calculateur électronique, à partir d'informations prédéterminées de correction d'erreur ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, un résidu, désigné par Res$_i$, ramené à la

verticale, suivant l'équation $Res_i = \frac{STEC_i - UISD_i}{F_{pp\,standard}}$ dans laquelle :

•* STECi désigne le délai ionosphérique de la ligne de vue réelle mesuré par une station d'observation et fonction de l'élévation de ladite ligne de vue;

•* UISDi désigne le délai ionosphérique vertical interpolé suivant le standard du terminal utilisateur à partir des GIVDk des IGPk de la maille entourant l'IPPi ;

•* $F_{pp\ standard}$ désigne la fonction de rabattement standard du délai ionosphérique en fonction de l'élévation de la ligne de vue, puis le carré du résidu. Le procédé de calcul optimal des variances des résidus des IGP est caractérisé en ce qu'il comprend en outre les étapes consistant à :

pour chaque point de percement d'observation IPPi du deuxième ensemble,

•- déterminer des valeurs d'incréments de variance $\Delta_{Resk}{}^2$ à attribuer respectivement aux IGPk de la maille m de l'IPPi considéré par une méthode d'interpolation inverse utilisant une méthode de Moindres Carrés dans laquelle un vecteur Yi de répartition du carré du résidu $Res_i{}^2$ de l'IPPi considéré est calculé suivant l'équation: $Yi = Hi^t.CHi.Hi^t)^{-1}.Res_i{}^2$ dans laquelle :

•* $H = [w_1\ w_2\ ...\ W_{NIGP}]$ désigne un vecteur-ligne à $N_{IGP}$ composantes pour réaliser l'interpolation de l'IPPi considéré, chaque composante $w_k$, k variant de 1 à $N_{IGP}$, correspondant au poids d'un $IGP_k$ obtenu avec la méthode de calcul d'interpolation directe définie par le standard pour l'IPPi considéré ;

$$\bullet^* \quad Yi = \begin{bmatrix} \Delta_{Res1}{}^2 \\ \Delta_{Res2}{}^2 \\ ... \\ \Delta_{REesNIGP}{}^2 \end{bmatrix} \quad \text{désigne un vecteur-colonne à } N_{IGP} \text{ composantes de la répartition du carré du}$$

résidu $Res_i{}^2$ à répartir sur les $N_{IGP}$ IGPk lorsque la maille de l'IPPi considéré comporte $N_{IGP}$ IGP, comme résultat de la résolution de l'équation ;

•* $Res_i{}^2$ désigne le carré du résidu à répartir, puis

•- déterminer un coefficient de pondération pi comme inverse d'un poids, ce coefficient de pondération étant représentatif de la qualité de la mesure du STECi redressé en VTECi par la division avec la fonction de rabattement de l'IPPi considéré, et exprimé suivant la formule suivante

$$p_i = \frac{1}{w_i} \times \frac{\sigma_{VTEC_i}{}^2}{\sigma_{VTEC\ NOMINAL}{}^2}$$

dans laquelle :

•* $\sigma_{VTEC_i}{}^2$ désigne le bruit de mesure de la pseudo-distance mesuré par le terminal de mesure pour l'IPPi considéré,

•* $w_i$ désigne le poids de l'IPPi suivant l'IGP tel que défini par le standard DO-229 ; et

•* $\sigma_{VTEC_i}{}^2$ désigne un bruit de mesure nominal de référence du terminal de mesure ;

ensuite, après avoir calculé tous les Yi et pi correspondant au premier ensemble des points de percement IPPi observé, pour chaque IGP,

•- faire un tri des résidus calculés par la méthode d'interpolation inverse en enlevant les résidus calculés à partir des IPPi dont les qualités de mesures sont insuffisantes par rapport à un seuil de qualité prédéterminé, et garder les $N_{ipp\_fil}$ résidus calculés, puis

•- calculer une variance de résidu simplifié non dilaté suivant l'équation :

$$\sigma_{MOPS\_simp} = \sqrt{\frac{1}{N_{ipp\_fil}} \times \sum_{i=1}^{Nipp\_fil} \Delta_{Res_{ipp\ i}}{}^2}$$

dans lquelle :

•* $N_{ipp\_fill}$ désigne le nombre des IPP ayant généré un résidu pour l'IGP concerné et dont la qualité de mesure est suffisante ;

•* $\Delta_{Res_{ipp\,i}}^2$ est le résidu interpolé en inverse à l'IGP considéré pour l'IPPi faisant partie des IPP triés ayant généré un résidu pour l'IGP concerné.

Suivant des modes particuliers de réalisation, le procédé de calcul optimal simplifié des variances $\sigma_{MOPS}^2$ des résidus d'un premier ensemble de points IGP d'une grille de correction ionosphérique d'une zone de service d'un système SBAS comprend l'une ou plusieurs des caractéristiques suivantes :

•- pour chaque IGPk du deuxième ensemble, calculer une variance de résidu simple dilaté $\sigma_{MOPS\_simp}^d$ à partir de la variance de résidu simple non dilaté $\sigma_{MOPS\_simp}$ suivant l'équation : $\sigma_{MOPS\_simp}^d = \left(\dfrac{t_{v_k,\alpha}}{G(p)}\right) . \sigma_{MOPS\_simp}$

avec $d_k = \left(\dfrac{t_{v_k,\alpha}}{G(p)}\right)$ associé à l'IGPk, k variant de 1 à $N_{IGP}$ $t_{v_k,\alpha}$ désignant le facteur de Student associé l'IGPk de rang k fonction de $v_k$ le degré de liberté et fonction de la probabilité de confiance $\alpha$, ledit facteur de Student $t_{v_k,\alpha}$ permettant de borner une erreur avec un niveau de confiance (1-p) prédéterminé et requis par le service SBAS, la

probabilité de confiance $\alpha$ étant lié au niveau de confiance par la relation $\alpha = 1 - \dfrac{1}{2} . p$ , et le degré de liberté

$v_k$ étant égal ici au nombre d'IPP ayant généré un résidu pour l'IGPk concerné moins un ; et $G(p)$ désignant la valeur obtenue lorsque l'hypothèse gaussienne est appliquée pour la même probabilité de confiance $\alpha$, c'est à dire la limite du facteur de Student $t_{v_k,\alpha}$ lorsque le degré de liberté $v_k$ tend vers l'infini ;

•- la forme de chaque maille est une forme triangulaire et le nombre $N_{IGP}$ des IGP sommets de chaque maille et égale à 3, ou

La forme de chaque maille est la forme d'un quadrilatère, de préférence comprise parmi les formes d'un rectangle, d'un carré et d'un losange, et le nombre $N_{IGP}$ des IGP sommets de chaque maille et égale à 4.

L'invention a également pour cinquième objet un système SBAS d'augmentation à base de satellites pour augmenter les performances d'un système global de navigation par satellites GNSS, le système SBAS comprenant des terminaux utilisateurs de service(s) SBAS, un ou plusieurs satellites d'augmentation des satellites du système GNSS et de diffusion de messages d'information aux terminaux utilisateurs, une ou plusieurs stations d'observation munis de récepteurs GNSS, et un ou plusieurs calculateurs. Le système SBAS est configuré pour calculer de manière optimale des variances des résidus d'un premier ensemble de points IGP d'une grille de correction ionosphérique d'une zone de service d'un système SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble. Le système SBAS est caractérisé en ce que le ou les calculateurs électroniques sont configurés pour:

•- à partir d'informations prédéterminées de correction d'erreur ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, un résidu, désigné par $Res_i$, ramené à la verticale, suivant l'équation :

$$Res_i = \dfrac{STEC_i - UISD_i}{F_{pp\,standard}} \quad \text{dans laquelle :}$$

•* STECi désigne le délai ionosphérique de la ligne de vue réelle mesuré par une station d'observation et fonction de l'élévation de ladite ligne de vue;

•* UISDi désigne le délai ionosphérique vertical interpolé suivant le standard du terminal utilisateur à partir des GIVDk des IGPk de la maille entourant l'IPPi ;

•* $F_{pp\,standard}$ désigne la fonction de rabattement standard du délai ionosphérique en fonction de l'élévation de la ligne de vue, puis calculer le carré du résidu ; et ensuite

pour chaque point de percement d'observation IPPi du deuxième ensemble,

•- déterminer des valeurs d'incréments de variance $\Delta_{Resk}^2$ à attribuer respectivement aux IGPk de la maille m de l'IPPi considéré par une méthode d'interpolation inverse utilisant une méthode de Moindres Carrés dans laquelle un vecteur Yi de répartition du carré du résidu $Res_i^2$ de l'IPPi considéré est calculé suivant l'équation

$Yi = Hi^t.(Hi.Hi^t)^{-1}.Res_i^2$ dans laquelle :

•* $H = [w_1 \; w_2 \; ... \; W_{N_{IGP}}]$ désigne un vecteur-ligne à $N_{IGP}$ composantes pour réaliser l'interpolation de l'IPPi considéré, chaque composante $w_k$, k variant de 1 à $N_{IGP}$, correspondant au poids d'un $IGP_k$ obtenu avec la méthode de calcul d'interpolation directe définie par le standard pour l'IPPi considéré ;

•* $Yi = \begin{bmatrix} \Delta_{Res1}^2 \\ \Delta_{Res2}^2 \\ ... \\ \Delta_{ResNIGP}^2 \end{bmatrix}$ désigne un vecteur-colonne à $N_{IGP}$ composantes de la répartition du carré du

résidu $Res_i^2$ à répartir sur les $N_{IGP}$ IGPk lorsque la maille de l'IPPi considéré comporte $N_{IGP}$ IGP, comme résultat de la résolution de l'équation ;

•* $Res_i^2$ désigne le carré du résidu à répartir, puis

•- déterminer un coefficient de pondération pi comme inverse d'un poids, ce coefficient de pondération étant représentatif de la qualité de la mesure du STECi redressé en VTECi par la division avec la fonction de rabattement de l'IPPi considéré, et exprimé suivant la formule suivante : $p_i = \dfrac{\sigma_{VTEC_i}^2}{\sigma_{VTEC\,NOMINAL}^2} \; p_i$

dans laquelle :

•* $\sigma_{VTEC_i}^2$ désigne le bruit de mesure de la pseudo-distance mesuré par le terminal de mesure pour l'IPPi considéré, et
•* $\sigma_{VTEC_i}^2$ désigne un bruit de mesure nominal de référence du terminal de mesure ;
ensuite, après avoir calculé tous les Yi et pi correspondant au premier ensemble des points de percement IPPi observé,

•- pour chaque IGP, calculer une variance de résidu non dilaté suivant l'équation :

$$\sigma_{MOPS} = \sqrt{\frac{1}{Ps} \times \sum_{i=1}^{Nipp} \frac{1}{p_i} \times \Delta_{Res_{ipp\,i}}^2} \quad \text{dans laquelle}$$

•* Ps est la somme des poids normalisés $1/p_i$ de chaque résidu disponibles pour l'IGP considéré suivant :

$$Ps = \sum_{i=1}^{N_{ipp}} \frac{1}{p_i}$$

•* $N_{ipp}$ désigne le nombre des IPP ayant généré un résidu pour l'IGP concerné,
•* $\Delta_{Res_{ipp\,i}}^2$ est le résidu interpolé en inverse à l'IGP considéré pour l'IPPi faisant partie des IPP ayant généré un résidu pour l'IGP concerné.

L'invention sera mieux comprise à la lecture de la description de plusieurs formes de réalisation qui va suivre, donnée uniquement à titre d'exemple et faite en se référant aux dessins sur lesquels :

- la Figure 1 est une première vue partielle selon l'art antérieur d'un système SBAS illustrant la grille de correction ionosphérique et la définition d'un point de percement IPP ;
- la Figure 2 est une deuxième vue partielle selon l'art antérieur du système SBAS selon l'invention illustrant la grille de correction ionosphériques et des mesures de pseudo-distances bi-fréquence effectué à partir d'une station d'observation et de contrôle RIMS
- la Figure 3 est une première vue de dessus partielle selon l'art antérieur d'un exemple de maillage des IGP de la grille de correction ionosphérique et des IPP contenus dans une zone d'influence permettant le calcul du GIVD d'un point d'interpolation IGP donné ;
- la Figure 4 est une deuxième vue de dessus partielle selon l'art antérieur d'un exemple de maillage des IGP de la grille de correction ionosphérique et de la configuration de calcul de l'UIVD pour un IPP donné ;
- la Figure 5 est une troisième vue de dessus partielle selon l'art antérieur d'un exemple de maillage des IGP de la grille de correction ionosphérique et de la configuration de calcul de l'UIVE pour un IPP donné ;
- la Figure 6 est une quatrième vue de dessus partielle selon l'art antérieur d'un exemple de maillage des IGP de la grille de correction ionosphérique dans lequel suivant un procédé connu d'ajustement des GIVE, une première boucle de test des IGP est parcouru, le test d'un IGP entrainant la vérification de l'intégrité sur chaque IPP dans lequel l'élaboration de son UIVD/UIVE a fait intervenir l'IGP testé ;

- la Figure 7 est un ordinogramme d'un procédé d'ajustement optimal selon l'invention des bornes d'erreurs de correction GIVE d'un premier ensemble de points IGP d'une grille de correction ionosphérique d'une zone de service d'un système SBAS ;
- la Figure 8 est une vue de dessus partielle selon l'invention d'un exemple de maillage des IGP de la grille de correction ionosphérique dans lequel l'étape d'interpolation inverse selon le procédé d'ajustement optimal des GIVE de la Figure 7 est mise en oeuvre en disséminant le $\Delta UIVE^2$ comme composante $\Delta GIVE^2$ sur chaque IGP impacté ;
- la Figure 9 est une vue d'un exemple d'une zone de couverture du système européen d'augmentation EGNOS;
- la Figure 10 est une vue d'un exemple de balayage selon l'invention des mailles de la zone de service de la Figure 9 ;
- la Figure 11 est un ordinogramme de calcul optimal selon l'invention des variances $\sigma_{MOPS}^2$ des résidus d'un premier ensemble de points IGP d'une grille de correction ionosphérique d'une zone de service d'un système SBAS
- la Figure 12 est une vue de dessus partielle selon l'invention d'un exemple de maillage des IGP de la grille de correction ionosphérique dans lequel l'étape d'interpolation inverse selon le procédé de calcul optimal des variances $\sigma_{MOPS}^2$ des résidus de la Figure 11 est mise en oeuvre en distribuant le résidu d'un IPP sur les IGP de la maille dudit IPP.

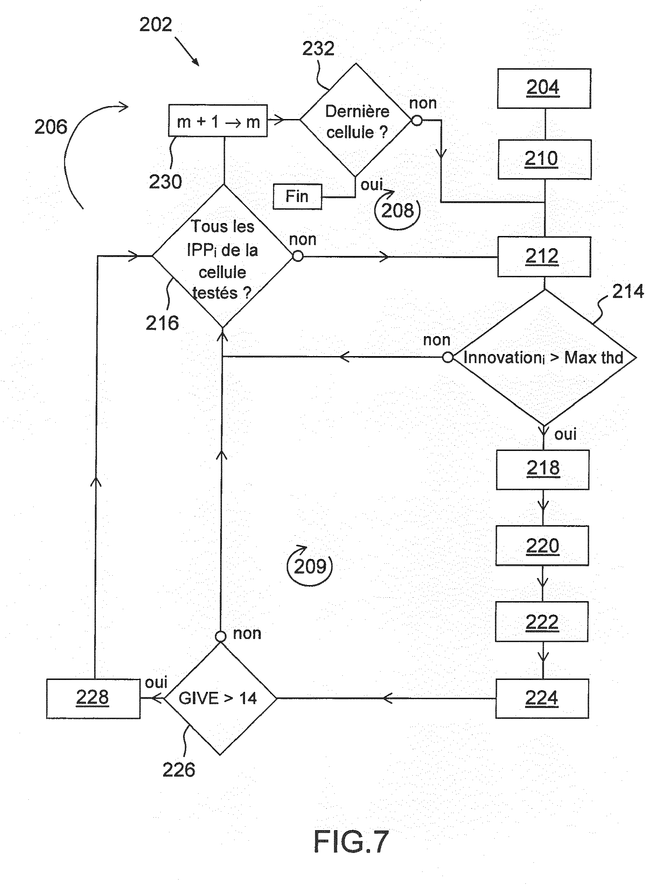

Suivant la Figure 7 et la première invention, un procédé d'ajustement optimal 202 de bornes d'erreurs, appelées GIVE finaux et associées à un premier ensemble de points IGPj d'une grille ionosphérique de correction d'une zone de service d'un système SBAS est mis en oeuvre par un ou plusieurs calculateurs, à partir d'une part d'informations de corrections d'erreur ionosphérique élaborées pour lesdits points IGPj du premier ensemble, j désignant un indice entier d'identification et de parcours desdits points IGPi d'une portion de la grille ionosphérique, structurée en un réseau maillé de cellules ayant une forme prédéterminée et correspondant à la zone de service SBAS, et à partir d'autre part d'informations de mesures de pseudo-distances d'un deuxième ensemble de points de percement de contrôle IPPi, contenus dans les cellules de la portion de service de la grille ionosphérique, les mesures de pseudo-distances étant effectuées par des stations de contrôle et de télémesures dénommées RIMS.

Les points IGPj de la portion de grille ionosphérique correspondant à la couverture de la zone de service SBAS, forment un réseau maillé dont les mailles ont une même forme prédéterminée, et cette forme est comprise parmi les formes triangulaires et les formes quadrilatères, de préférence les formes rectangulaires, carrées ou en losange.

La fourniture des informations de corrections d'erreur ionosphérique élaborées pour lesdits points IGPj du premier ensemble et des informations de mesures de pseudo-distances du deuxième ensemble de points de percement de contrôle IPPi est mise en oeuvre au cours d'une étape préalable 204 d'élaboration et de fourniture desdites informations formant une étape d'initialisation du procédé 202 d'ajustement optimal des bornes d'erreurs de GIVE finaux.

A l'inverse de ce qui est fait dans le procédé de l'état de l'art le procédé selon l'invention n'effectue pas de tests de vérification d'intégrité par IGP en parcourant une boucle de parcours des IGP sur le premier ensemble, mais effectue des tests de vérification d'intégrité par IPP en parcourant une boucle globale 206 de parcours des IPPi sur le deuxième ensemble.

Les IPPi du premier ensemble sont partitionnés en leurs cellules ou mailles d'appartenance et la boucle globale 206 de parcours des IPPi comporte une première de boucle 208 de parcours des cellules de la portion de grille selon un ordre ou un motif de parcours prédéterminé, et comporte, imbriquée dans la première boucle 208 de parcours des cellules, une deuxième boucle locale 209 de parcours des IPPi appartenant à une même cellule de la portion de grille ionosphérique.

Le procédé 202 d'ajustement optimal de bornes d'erreurs de GIVE finaux comprend un ensemble d'étapes exécutées après l'étape préalable 204.

Dans une première étape 210, une première cellule de début et d'initialisation de première boucle 208 est sélectionnée selon le rang initial qu'elle occupe dans le motif de parcours prédéterminé des cellules. L'indice de parcours de la première boucle étant désigné par m, l'indice m est mis à 1 et correspond au rang initial 1 de la première cellule du motif.

Puis, pour chaque IPPi contenu dans la cellule de rang m actuel dans l'ordre de parcours de la première boucle, les étapes suivantes sont exécutées.

Dans une deuxième étape 212, pour l'IPPi pertinent de rang i contenu dans la cellule de rang m actuel, l'innovation de l'IPPi pertinent, désignée par stdUIVDerror$_i$, est calculée selon l'expression :

$$\text{stdUIVDerror}_i = \frac{|\text{VTEC}_i - \text{UIVD}_i|}{\sqrt{\sigma_{\text{VTEC}_i}{}^2 + \sigma_{\text{UIVE}_i}{}^2}}$$

(équation #11)

dans laquelle :

•- VTEC$_i$ désigne le délai ionosphérique vertical mesuré à l'IPP i,
•- UIVD$_i$ désigne le délai ionosphérique vertical interpolé à partir des GIVDj des IGPj de la maille de rang m entourant l'IPPi concerné;
•- $\sigma_{VTEC_i}$ désigne l'écart-type du bruit de mesure à l'IPPi,
•- $\sigma_{UIVE_i}$ désigne l'écart-type issu des GIVE des IGPj de la maille de rang m ayant participé à l'interpolation de l'UIVDi de l'IPPi concerné.

Ensuite dans une troisième étape de test 214, il est vérifié si l'innovation de l'IPPi actuel parcouru dans la maille actuelle de rang m est strictement supérieur à un seuil théorique prédéterminé, désigné par *Max*Thd, la condition de test s'écrivant :

$$stdUIVDerror_i \geq MaxThd$$

Par exemple, *Max*Thd, est pris égal à 5,33 sous des hypothèses de distribution gaussienne de l'erreur, ce qui correspond à un niveau de confiance exigé par le service SBAS égal à $(1\text{-}10^{-7})$, soit une confiance de 99,99999%. Ce seuil théorique pourra être modifié si on souhaite modifier le niveau de probabilité requis et sera noté par la suite *G(p)* avec $(p) = erf^{-1}(1-p) \times \sqrt{2}$ , erf$^{-1}$(.) désignant la fonction réciproque de la fonction erreur et (1-p) désignant le niveau de confiance requis. Il est à noter ici que le seuil maximum autorisé peut être calculé avec une marge, évitant ainsi les cas jugés trop limites.

Si cette condition n'est pas vérifiée, c'est-à-dire si l'innovation de l'IPPi actuel est inférieure ou égale au seuil théorique prédéterminé *Max*Thd, cela veut dire que les IGPj de la maille actuelle de rang m ayant servi à l'interpolation de l'UIVDi de l'IPPi considéré ont un GIVEj suffisant pour garantir le niveau d'intégrité requis. Dans ce cas, les GIVEj de la maille actuelle restent inchangés et une quatrième étape 216 de test de la fin de la deuxième boucle locale de parcours des IPPi contenus dans la maille de rang m actuel est exécutée.

Si cette condition est vérifiée, c'est-à-dire si l'innovation de l'IPPi actuel dépasse le seuil *Max*Thd, alors, la quantité $\Delta^2_{UIVE_i}$ qu'il faudrait rajouter au $\sigma^2_{UIVE_i}$ sur l'IPPi considéré pour qu'il recouvre le niveau d'intégrité requis est calculée dans une cinquième étape 218 suivant l'équation :

$$\Delta_{UIVE_i}{}^2 = \left(\beta + \sigma_{UIVE_i}{}^2\right) \times \left(K_{fact}{}^2 - 1\right)$$
$$(\text{équation \#12})$$

dans laquelle :

•- $\sigma_{UIVE_i}$ désigne l'écart-type issu des GIVE des IGPj de la maille de rang m ayant participé à l'interpolation de l'UIVDi de l'IPPi concerné ;
•- $\beta$ et $K_{fact}{}^2$ désignent respectivement un premier terme et un deuxième terme.

Le premier terme $\beta$ s'écrit selon l'équation:

$$\beta = \sigma_{VTEC_i}{}^2$$

où VTEC$_i$ désigne le délai ionosphérique vertical mesuré à l'IPPi considéré.
le deuxième terme $K_{fact}{}^2$ s'écrit selon l'équation :

$$K_{fact}{}^2 = \frac{stdUIVDerror_i{}^2}{(SafMarg \times MaxThd)^2}$$

dans laquelle :

> •- *M*axThd désigne le seuil théorique prédéterminé,
> •- stdUIVDerror$_i$ désigne l'innovation de l'IPPi concerné calculé dans la deuxième étape 212 ;
> •- SafMarg désigne la marge d'intégrité en pourcentage du seuil maximum toléré que l'on souhaite générer, supérieure à 0 et strictement inférieure à 1. De manière préférée, on souhaitera générer une marge comprise entre 10% et 50% au maximum. Cette marge est donc configurée de manière à générer une marge de garantie d'intégrité en valeur relative, notée X et exprimée en pourcentage, suivant l'expression: SafMarg = (1 - X).

La marge de garantie d'intégrité en valeur relative X est fournie au préalable avant l'exécution du procédé 202 d'ajustement optimal des bornes d'erreurs des GIVE finaux.

La quantité $\Delta_{UIVE_i}$ ainsi calculée satisfait l'équation #13:

$$ \mathrm{SafMarg} \times \mathrm{MaxThd} = \frac{|\mathrm{VTEC}_i - \mathrm{UIVD}_i|}{\sqrt{\sigma_{\mathrm{UIVE}_i}{}^2 + \Delta_{\mathrm{UIVE}_i}{}^2 + \sigma_{\mathrm{VTEC}_i}{}^2}} $$

et le carré de cette quantité $\Delta_{UIVE_i}$ est exactement la valeur qu'il faut rajouter à la variance $\sigma_{UIVE_i}{}^2$ pour que l'intégrité soit garantie avec la marge X configurée.

Puis dans une sixième étape 220, l'incrément de variance calculé dans la cinquième étape 218 est réparti ou distribué entre les IGPj ayant servi au calcul de l'UIVEi de l'IPPi considéré.

Etant donné que l'UIVDi et l'UIVEi d'un IPPi sont obtenus par interpolation, cette interpolation étant normalisée selon une fonction normalisée définie par le standard RTCA DO-229D, il faut donc inverser cette interpolation pour redistribuer de manière parfaitement conforme le $\Delta_{UIVE_i}{}^2$ calculé précédemment dans la cinquième étape 218.

Suivant le standard précité, il est rappelé que la variance de l'UIVEi de l'IPPi est obtenue par l'expression suivante (équation #14) :

$$ \sigma_{\mathrm{UIVE}_i}{}^2 = \sum_{k=1}^{N_{\mathrm{IGP}}} w_k \cdot \sigma_{\mathrm{GIVE}_k}{}^2 $$

dans laquelle

> •- $N_{IGP}$ est le nombre d'IGPs de la maille ou cellule de forme prédéterminée utilisés par le calcul de l'UIVDi et UIVEi de l'IPPi considéré, ce nombre pouvant être 3 ou 4 en fonction du type de maille utilisée ;
> •- k désigne un indice de numérotation dans la maille contenant l'IPPi des IGPs de ladite maille,
> •- $w_k$ le poids de l'IGPk calculé par application du standard suivant une fonction qui dépend de la distance entre l'IPPi et l'IGPk)..,

Cette interpolation étant une interpolation barycentrique, la somme des poids $w_k$ est égale à 1, c'est dire vérifie la relation : $\sum_{k=1}^{N_{IGP}} w_k = 1$

En conséquence, le $\Delta_{UIVE_i}{}^2$ est réparti de la même façon et vérifie la relation (équation #15):

$$ \Delta_{\mathrm{UIVE}_i}{}^2 = \sum_{k=1}^{N_{\mathrm{IGP}}} w_k \cdot \Delta_{\mathrm{GIVE}_k}{}^2 $$

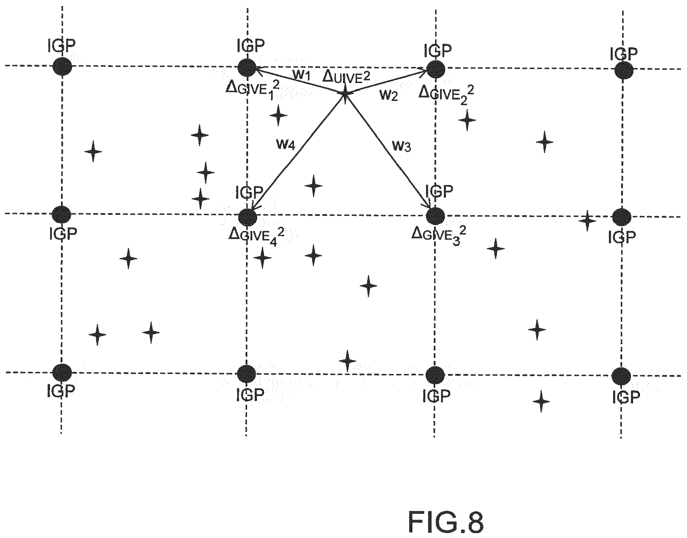

La sixième étape 220 est un procédé de détermination des valeurs de $\Delta_{GIVE_k}{}^2$ à attribuer respectivement aux IGPk de l'IPPi considéré tels que décrits sur la Figure 8, lequel procédé utilise la méthode MC des Moindres Carrés pour assurer la réalisation de cette partition quelles que soient les conditions.

Une équation d'observation est définie par l'expression :

$$Xi = Hi.Yi$$

dans laquelle

•- Hi = [$w_1$ $w_2$ $w_3$ $w_4$] désigne un vecteur-ligne à quatre composantes lorsque quatre IGPs ont été utilisés pour réaliser l'interpolation de l'IPPi considéré, chaque $w_k$ correspondant au poids d'un $IGP_K$ obtenu avec la méthode de calcul définie par la norme RTCA DO-229D pour l'IPPi considéré ;

•- $Yi = \begin{bmatrix} \Delta_{GIVE_1}{}^2 \\ \Delta_{GIVE_2}{}^2 \\ \Delta_{GIVE_3}{}^2 \\ \Delta_{GIVE_4}{}^2 \end{bmatrix}$ désigne un vecteur-colonne à quatre composantes de la répartition du $\Delta_{UIVE_i}{}^2$ à répartir sur

les quatre IGPk lorsque la maille de l'IPPi considéré comporte quatre IGPs, comme résultat de la résolution de l'équation ;
•- Xi = $\Delta_{UIVE_i}{}^2$ désigne la quantité à répartir calculée dans la cinquième étape 218.

Il est à remarquer que le cas où seuls trois IGPs appartenant à une maille triangulaire sont utilisés pour le calcul de l'UIVEi de l'IPPi considéré, il suffit de réadapter les tailles des vecteurs Hi et Yi, Hi ayant alors une taille [3,1] et Yi une taille [1,3].
Suivant un premier mode de réalisation de la sixième étape 220 et une première méthode de calcul, l'inflation répartie des GIVEK est mise en oeuvre par une méthode de Moindre Carré Classique (en anglais CLSQ pour Classical or Conventional Least Square) dans laquelle la répartition Yi du $\Delta_{UIVE_i}{}^2$ de l'IPPi considéré sur les IGPk associés est calculée dans une unique sous-étape à l'aide de l'équation #16:

$$Yi = Hi^t.(Hi.Hi^t)^{-1}.\Delta_{UIVE_i}{}^2$$

Suivant un deuxième mode de réalisation de la sixième étape 220 et une deuxième méthode de calcul, l'inflation répartie des GIVEK est mise en oeuvre par une méthode de Moindre Carré Classique suivie d'un ajustement propre des GIVEK pour chaque IGPk du point IPPi considéré, fonction d'un niveau de confiance associée audit IGPK. Cette deuxième méthode de calcul est dénommée Méthode des Moindres carrés ajustée par un niveau de confiance (en anglais CALSQ pour Confidence Adjusted Least Square).
Dans cette deuxième méthode de calcul, on applique d'abord la même méthode de calcul des moindres carrés selon la même formulation que celle utilisé par la première méthode de calcul :

$$Yi = Hi^t.(Hi.Hi^t)^{-1}.\Delta_{UIVE_i}{}^2$$

Ensuite, une fois cette première série de $\Delta_{GIVE_k}$ obtenus, on réajuste leur valeur en fonction d'un niveau de confiance attribué à chaque IGPk héritant d'un $\Delta_{GIVE_k}$, suivant un facteur de Student dont le degré de liberté est égal au nombre d'IPPs situé dans un voisinage prédéterminé de l'IGPk concerné moins un en utilisant l'expression :

$$\Delta_{GIVE_k}{}^2 \leftarrow \left(\frac{t_{v_k,\alpha}}{G(p)}\right)^2 \times \Delta_{GIVE_k}{}^2$$

dans laquelle :

•- $t_{v_k,\alpha}$ désigne le facteur de Student qui donne la confiance avec une probabilité de confiance donnée par un terme $\alpha$, que l'on a par rapport au critère gaussien lié à l'ajustement du GIVEi de l'IGPi concerné, et avec $v_k$ le degré de liberté de la distribution correspondant ici au nombre d'IPP autour d'un IGP k moins 1 ; le terme $\alpha$ est fonction d'un niveau prédéterminé de confiance (1-p) suivant l'expression $\alpha = 1 - \frac{1}{2}.p$ , p désignant le risque d'erreur; par exemple si on cherche l'obtention d'un risque d'erreur de $10^{-7}$, c'est-à-dire un niveau de confiance de 0, 9999999,

$$\alpha = 1 - \frac{1}{2}.10^{-7} \; ; \text{ et}$$

•- $G(p)$ désignant la valeur obtenue lorsque l'hypothèse de distribution gaussienne de l'erreur est appliquée pour la même probabilité de confiance $(1-p)$ que celle utilisée pour le calcul de $\alpha$, c'est à dire la limite du facteur de Student $t_{v_k,\alpha}$ lorsque le degré de liberté $v_k$ tend vers l'infini ; par exemple si on cherche l'obtention d'un niveau de confiance de $(1 - 10^{-7})$, $\alpha = 1 - \frac{1}{2}.10^{-7}$ et $G(p) = 5,33$.

Le voisinage prédéterminé de l'IGPk peut être définie par un rayon prédéterminé.

La mise en oeuvre de la deuxième méthode de calcul dite « CALSQ » peut être formulée de manière condensée, en posant :

$$T_i^{CALSQ} = \frac{1}{G(p)^2} \begin{bmatrix} t_{v_1,\alpha}{}^2 & 0 & 0 & 0 \\ 0 & t_{v_2,\alpha}{}^2 & 0 & 0 \\ 0 & 0 & t_{v_3,\alpha}{}^2 & 0 \\ 0 & 0 & 0 & t_{v_4,\alpha}{}^2 \end{bmatrix}$$

par la formulation suivante :

$$Yi = T_i^{CALSQ}.Hi^t.(Hi.Hi^t)^{-1}.\Delta_{UIVE_i}{}^2$$

(équation #17)

Il est à remarquer que cette méthode est considérée comme conservative en raison du fait que plus le nombre d'IPPs autour d'un IGP est petit, plus la quantité qui y sera ajustée $\Delta_{GIVE_k}{}^2$ est augmentée.

Suivant un troisième mode de réalisation de la sixième étape 220 et une troisième méthode de calcul, l'inflation répartie des GIVEk est mise en oeuvre avec une redistribution suivant les niveaux de confiance affectés aux IGPk associés à l'IPPi considéré. Cette troisième méthode de calcul est dénommée Méthode des Moindres carrés pondérée par les niveaux de confiance (en anglais CWLSQ pour Confidence Weighted Least Square).

Dans cette troisième méthode de calcul, on calcule d'abord les mêmes facteurs de Student $t_{v_k,\alpha}$ que ceux calculés dans la deuxième méthode de calcul, associés respectivement aux IGPk de l'IPPi considéré.

Puis, à partir des facteurs de Student $t_{v_k,\alpha}$ calculés, une matrice diagonale Pi est construite en posant :

$$Pi = \begin{bmatrix} q_1 & 0 & 0 & 0 \\ 0 & q_2 & 0 & 0 \\ 0 & 0 & q_3 & 0 \\ 0 & 0 & 0 & q_4 \end{bmatrix}$$

avec $q_k = \left(\frac{t_{v_k,\alpha}}{G(p)}\right)^2$ associé à l'IGPk, k variant de 1 à $N_{IGP}$.

On notera que cette matrice Pi est de taille 4x4 lorsque quatre IGPk sont utilisés pour l'interpolation du délai à l'IPPi. Si seuls trois IGPk sont utilisés, ce sera une matrice 3x3.

Ensuite on calcule le vecteur Yi de répartition du $\Delta_{UIVE_i}{}^2$ de l'IPPi considéré sur les IGPk associés selon la formulation suivante du CWLSQ » :

$$Yi = Pi.Hi^t.(Hi.Pi.Hi^t)^{-1}.\Delta_{UIVE_i}{}^2$$

(équation #18)

On obtient ici avec cette troisième méthode de calcul une légère redistribution du $\Delta_{\text{UIVE}_i}{}^2$ en fonction du niveau de confiance qu'on a sur chaque IGPk. Ainsi, si un IGPk est éloigné de l'IPPi mais si le nombre d'IPP au voisinage dudit IGPk est faible, son GIVEK sera augmenté de manière plus importante que dans la formulation « CLSQ » de la première méthode de calcul au détriment de l'IGPk le plus proche de l'IPPi testé.

Suivant un quatrième mode de réalisation de la sixième étape 220 et une quatrième méthode de calcul, l'inflation répartie des GIVEk est mise en oeuvre avec un ajustement de la confiance associée au $\Delta_{\text{UIVE}}{}^2$. Cette quatrième méthode est dénommé Méthode des Moindres Carrés ajusté par niveau de confiance résiduelle ARCLSQ (en anglais Adjusted Residual Confidence Least Square).

Dans cette quatrième méthode de calcul, il s'agit d'évaluer un niveau de confiance moyen que l'on appliquera directement au $\Delta_{\text{UIVE}_i}{}^2$ avant de le redistribuer entre les IGPk.

Dans cette quatrième méthode de calcul, le degré de liberté de la loi de distribution de Student est d'abord estimé par un nombre $\text{Nb}_{\text{IPP MOYEN}}$, calculé à partir de la somme pondérée du nombre d'IPP au voisinage des IGPk ayant servis à l'obtention de l'UIVDi et UIVEi de l'IPPi testé, suivant la formule :

$$\text{Nb}_{\text{IPP MOYEN}} = \frac{\sum_{k=1}^{N_{IGP}} w_k.\left(\text{Nb}_{\text{IPP}\,k} - 1\right)}{\sum_{k=1}^{N_{IGP}} w_k}$$

(équation #19)

avec :

• $w_k$, le poids de l'IGPk obtenu par application de la méthode d'interpolation définie par le standard RTCA DO-229D sur l'IPPi concerné pour l'obtention de son UIVDi et UIVEi ;

• $\text{Nb}_{\text{IPP}\,k}$ correspond au nombre d'IPP situé autour de l'IGPk dans le voisinage constitué de la réunion de toutes les cellules contenant cet IGPk.

Puis le facteur de Student associé $t_{\text{Nb}_{\text{IPP MOYEN}},\alpha}$ est calculé.

Ensuite, le vecteur Yi de répartition du $\Delta_{\text{UIVE}_i}{}^2$ de l'IPPi considéré sur les IGPk associés est calculé selon la formulation suivante du « ARCLSQ » :

$$\text{Yi} = \text{Hi}^t.\left(\text{Hi}.\text{Hi}^t\right)^{-1}.\left[\Delta_{\text{UIVE}_i}{}^2.\left(\frac{t_{\text{Nb}_{\text{IPP MOYEN}},\alpha}}{G(p)}\right)^2\right]$$

(équation #20)

Ensuite, dans une septième étape 222 consécutive à la sixième étape 220, pour chaque IGPk de la maille à laquelle appartient l'IPPi considéré, la variance du $\text{GIVE}_k$ dudit IGPk est mise à jour en remplaçant la valeur actuelle $\sigma_{\text{GIVE}_k}$ du GIVEk par l'expression $\sqrt{\sigma_{\text{GIVE}_k}{}^2 + \Delta_{\text{GIVE}_k}{}^2}$ d'une nouvelle valeur du GIVEk, ce qui s'écrit encore :

$$\sigma_{\text{GIVE}_k} \leftarrow \sqrt{\sigma_{\text{GIVE}_k}{}^2 + \Delta_{\text{GIVE}_k}{}^2}$$

Puis dans une huitième étape 224, pour chaque IGPk de l'IPPi testé, concerné, la nouvelle valeur du GIVEk est quantifiée selon une échelle d'échelons définie dans la norme RTCA DO-229D, toutes versions incluses jusqu'à la version actuelle E, dans laquelle un échelon maximal est fixé à la valeur entière 15.

Ensuite, dans une neuvième étape de test 226, les valeurs quantifiées des GIVEk, associées respectivement aux IGPk de l'IPPi testé sont chacune comparées à la valeur seuil entière égale à 14.

Lorsque, parmi les valeurs quantifiées des GIVEk, il existe un GIVEk dépassant la valeur seuil de 14, dans une dixième étape 228, la ou les valeurs quantifiées des GIVEk qui dépassent la valeur seuil de 14 sont mises à la valeur butée entière de 15, puis un branchement à la quatrième étape 216 de test de la fin de la deuxième boucle locale de parcours des IPPi contenus dans la maille de rang m.

Lorsque, parmi les valeurs quantifiées des GIVEk il n'existe aucun GIVEk dépassant la valeur seuil de 14, les valeurs quantifiées des GIVEk restent en l'état et un branchement direct à la quatrième étape 216 est effectué.

Au cours de l'exécution de la quatrième étape 216, il est vérifié si tous les IPPi contenus dans la cellule de rang m actuel ont été testés.

Si tous les IPPi de la cellule de rang m actuel n'ont pas été testés, un IPPi restant non testé de la cellule de rang m actuel est testé dans la deuxième boucle de parcours local, l'indice i de l'IPPi non testé devenant le nouvel indice de l'IPPi à tester, et les cinquième, sixième, septième, huitième, neuvième étapes sont répétées.

Si tous les IPPi de la cellule de rang m actuel ont été testés, une onzième étape 230 est exécutée au cours de laquelle le rang m de parcours des cellules suivant le motif prédéterminé est incrémenté d'une unité. Après la onzième étape 230, une douzième étape 232 de test de fin de la première boucle est mise en oeuvre au cours de laquelle il est vérifié si l'indice m incrémenté de parcours des cellules dépasse le rang de la dernière cellule du motif de parcours.

Lorsque l'indice m incrémenté de parcours des cellules ne dépasse pas le rang de la dernière cellule du motif de parcours, c'est-à-dire lorsque l'indice de parcours incrémenté m est inférieur ou égal à l'indice de parcours de la dernière cellule du motif, i.e. la cellule du motif programmée pour être balayée en dernier, l'indice incrémentée m de parcours de la première boucle devient l'indice actuel de parcours de la première boucle, pour chaque IPPi contenu dans la cellule de rang m actuel dans l'ordre de parcours de la première boucle, les étapes de la deuxième boucle locale sont exécutées.

Lorsque l'indice m incrémenté de parcours des cellules dépasse le rang de la dernière cellule du motif de parcours, le procédé illustré sur la Figure 7 est terminé.

Le motif de parcours prédéterminé des cellules est défini par une stratégie de balayage donnée de la portion de grille correspondant à la zone de service SBAS.

Une stratégie de balayage définit une méthode permettant d'effectuer le bouclage sur l'ensemble des IGP de la portion suivant la première boucle, l'idéal étant de commencer dans une zone à l'intérieur de laquelle on est le moins susceptible de déclencher une inflation des GIVE.

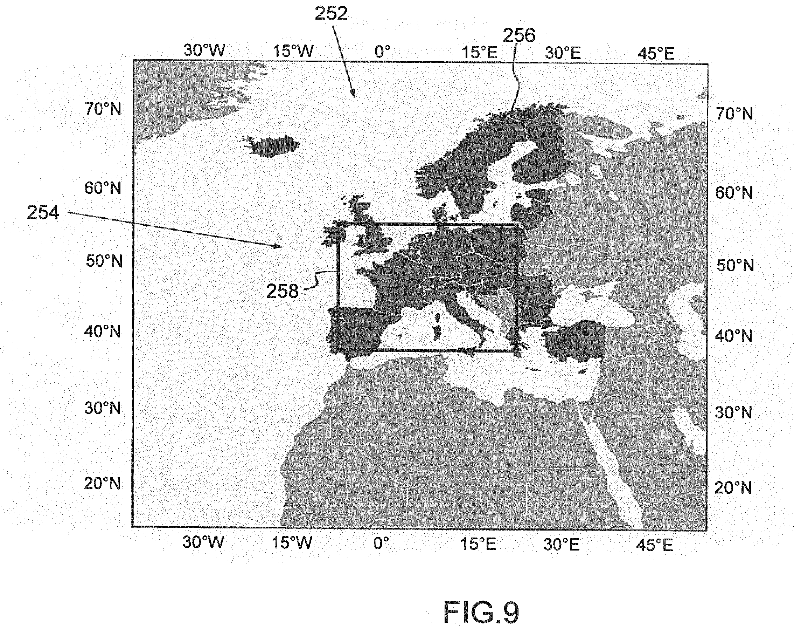

Suivant la Figure 9, une carte 252 représente la zone de couverture 254 du système EGNOS, avec en particulier les pays 256 en traits hachurés pour lesquels la mission d'EGNOS s'applique.

Suivant une première stratégie de balayage, on détermine d'abord dans une zone centrale, repérée par un cadre 258 en trait foncé sur la figure 9, la cellule avec laquelle le processus de balayage va commencer.

Cette cellule de départ est définie, soit comme la cellule la plus centrale par rapport au centre de la zone de service du système qui est généralement un bon indicateur, soit la cellule contenant les IGP dont la somme des GIVE est la plus petite.

Une fois cette cellule de départ localisée, on itère sur les cellules adjacentes en commençant toujours par la cellule contenant le plus d'IPP. Lorsque le nombre d'IPP contenu dans deux cellules adjacentes est le même, la cellule située la plus au Sud est choisie si la latitude de l'IGP le plus bas de la cellule est inférieur à 50°, sinon la cellule la plus au Nord est choisie.

Lorsque la zone de service est située dans l'hémisphère Sud, la première stratégie de définition d'un parcours des cellules inverse de manière complémentaire les directions considérés et décrites précédemment lorsque la zone de service est située dans l'hémisphère Nord.

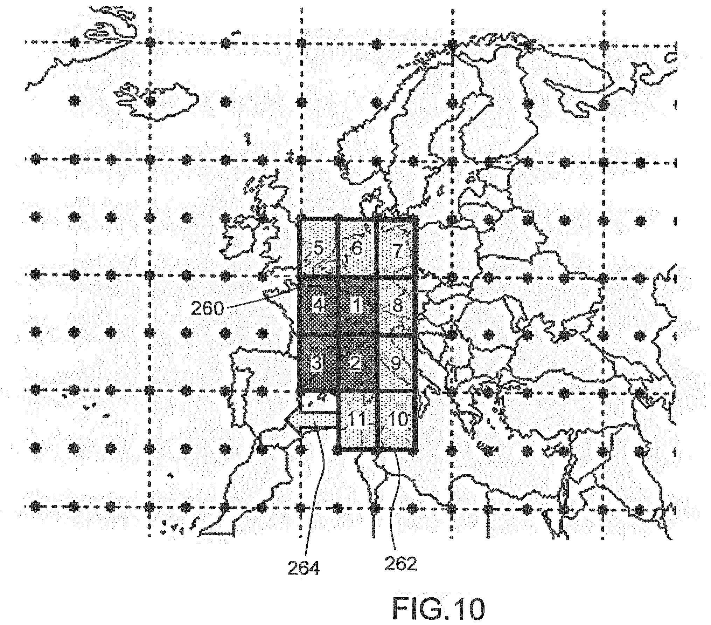

Suivant la Figure 10 et une deuxième stratégie de balayage, plus simple à mettre en oeuvre que la première stratégie de balayage, la cellule de départ est déterminée de la même manière que dans la première stratégie de balayage, et l'ordre de parcours des cellules suivantes est ensuite fixé par un motif 262 d'enroulement en forme de spirale autour de la cellule centrale dans un sens horaire. Le sens de parcours 264 de ce motif cellulaire spiralé est centrifuge. Le motif de parcours est illustré partiellement sur la Figure 10 par le début d'une suite de cellules numérotées de 1 à 11 en partant de la cellule centrale numéroté par le numéro 1.

Les deux méthodes itératives illustrées dans les Figures 9 et 10 ne sont que deux exemples de stratégie de balayage des cellules, des variantes de ces stratégies pouvant être envisagées. Le principe même de faire un balayage par cellule pour contrôler leur intégrité est considéré comme faisant partie de l'invention.

Le procédé de contrôle d'intégrité défini ci-dessus permet non seulement de vérifier dans un premier temps si l'intégrité est tenue mais apporte surtout la capacité de piloter les GIVE des IGP à tout moment avec une valeur optimale pour chacun d'eux qui minimise de manière considérable le risque d'interdire l'utilisation d'un IGP si son GIVE ne permet pas d'assurer l'intégrité au niveau d'une ligne de vue au moment du contrôle.

Un système SBAS d'augmentation à base de satellites pour augmenter les performances d'un système global de navigation par satellites GNSS, configuré pour exécuter le premier procédé 202 d'ajustement optimal des GIVE de la Figure 7, comprend des terminaux utilisateurs de service(s) SBAS, un ou plusieurs satellites d'augmentation des satellites du système GNSS et de diffusion de messages d'information aux terminaux utilisateurs, une ou plusieurs stations d'observation RIMS munis de récepteurs GNSS, et un ou plusieurs ou calculateurs.

Le système SBAS est configuré pour ajuster de manière optimale des bornes d'erreurs de correction ionosphérique, appelés GIVE finaux, d'un premier ensemble de points IGP d'une grille de correction ionosphérique d'une zone de service du système SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble.

Le ou les calculateurs électroniques du système SBAS sont configurés pour :

•- à partir d'informations prédéterminées de correction d'erreur ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, une innovation désignée par stdUIVDerror$_i$ , suivant l'expression :

$$stdUIVDerror_i = \frac{|VTEC_i - UIVD_i|}{\sqrt{\sigma_{VTEC_i}{}^2 + \sigma_{UIVE_i}{}^2}}$$

dans laquelle :

•* VTEC$_i$ désigne le délai ionosphérique vertical mesuré à l'IPP i,
•* UIVD$_i$ désigne le délai ionosphérique vertical interpolé à partir des GIVDj des IGPj de la maille de rang m entourant l'IPPi concerné;
•* $\sigma_{VTEC_i}$ désigne l'écart-type du bruit de mesure à l'IPPi,
•* $\sigma_{UIVE_i}$ désigne l'écart-type issu des GIVE des IGPj de la maille de rang m ayant participé à l'interpolation de l'UIVDi de l'IPPi concerné ; puis
•- lorsque l'innovation de l'IPPi parcouru dans la maille actuelle de rang m est strictement supérieur à un seuil théorique *Ma*xThd correspondant à niveau de confiance ou d'intégrité prédéterminé exigé par le service SBAS, calculer un incrément de variance $\Delta_{UIVE_i}{}^2$ qu'il faudrait rajouter au $\sigma_{UIVE_i}{}^2$ sur l'IPPi considéré pour qu'il recouvre le niveau d'intégrité requis suivant l'équation :

$$\Delta_{UIVE_i}{}^2 = \left(\beta + \sigma_{UIVE_i}{}^2\right) \times \left(K_{fact}{}^2 - 1\right)$$

dans laquelle :

•- $\sigma_{UIVE_i}$ désigne l'écart-type issu des GIVE des IGPj de la maille de rang m ayant participé à l'interpolation de l'UIVDi de l'IPPi concerné ;
•- $\beta$ et $K_{fact}{}^2$ désignent respectivement un premier terme et un deuxième terme,

Le premier terme $\beta$ étant déterminé selon l'équation:

$$\beta = \sigma_{VTEC_i}{}^2$$

où VTEC$_i$ désigne le délai ionosphérique vertical mesuré à l'IPPi considéré, et
le deuxième terme $K_{fact}{}^2$ étant déterminé selon l'équation :

$$K_{fact}{}^2 = \frac{stdUIVDerror_i{}^2}{(SafMarg \times MaxThd)^2}$$

•SafMarg désignant la marge d'intégrité en valeur de pourcentage que l'on souhaite générer qui est positive et strictement inférieure à 1, et qui est configurée en fonction d'une marge de garantie d'intégrité en valeur relative prédéterminée, notée X et exprimée en pourcentage, suivant l'expression : SafMarg = (1 - X) (par exemple, si on veut générer une marge d'intégrité de 15%, alors X=0,15 et .SafMarg = 0,85); puis

lorsque l'innovation de l'IPPi parcouru dans la maille actuelle de rang m est strictement supérieur à un seuil théorique *Ma*xThd :

• - déterminer des valeurs d'incréments de variance $\Delta_{GIVE_k}^2$ à attribuer respectivement aux IGPk de la maille de l'IPPi considéré par une méthode d'interpolation inverse utilisant une méthode de Moindres Carrés de sorte à répartir l'incrément de variance $\Delta_{UIVE_i}^2$ de l'IPPi suivant la relation :

$$\Delta_{UIVE_i}^2 = \sum_{k=1}^{N_{IGP}} w_k . \Delta_{GIVE_k}^2$$

dans laquelle

•- $N_{IGP}$ est le nombre d'IGPs de la maille de forme prédéterminée utilisés par le calcul de l'UIVDi et UIVEi de l'IPPi considéré ;

•- k désigne un indice de numérotation dans la maille contenant l'IPPi des IGP de ladite maille,

•- $w_k$ désignent les poids respectifs des IGPK, k variant de 1 à $N_{IGP}$, calculés par application du standard GNSS suivant une fonction du standard GNSS qui dépend de la distance entre l'IPPi et l'IGPk , la somme des poids $w_k$ étant égale à un ; puis

•- pour chaque IGPk de la maille m à laquelle appartient l'IPPi considéré, mettre à jour la variance $GIVE_k$ dudit IGPk en remplaçant la valeur actuelle $\sigma_{GIVE_k}$ du GIVEk par une nouvelle valeur égale à

$$\sqrt{\sigma_{GIVE_k}^2 + \Delta_{GIVE_k}^2} .$$

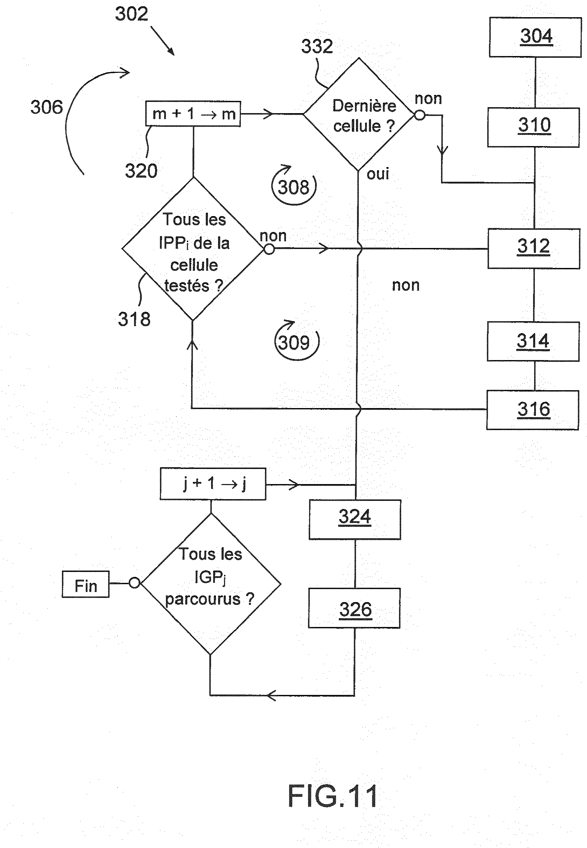

Suivant la Figure 11 et la deuxième invention, un deuxième procédé 302 de calcul optimisé des écarts-type de résidus, appelés $\sigma_{MOPS}$, ou des variances $\sigma_{MOPS}^2$ de résidus, dans le cas particulier où la norme de fonctionnement du terminal utilisateur est la norme MOPS, associés à un premier ensemble de points IGPj d'une grille ionosphérique de correction d'une zone de service d'un système SBAS, est maintenant décrite.

Les écarts-type $\sigma_{MOPS}$ permettent de modéliser l'erreur d'interpolation réalisée entre les IGP et le point de percement du signal reçu par l'utilisateur, et l'erreur de la fonction de rabattement du délai vertical (en anglais « vertical delay ») vers le délai oblique (en anglais « slant delay ») fixé ici par la norme MOPS, lesdits écarts-type $\sigma_{MOPS}$ intervenant dans le calcul des GIVE initiaux, et par voie de conséquence les GIVE finaux des IGP, déterminés suivant le premier procédé. Il est rappelé que les IGP assurent l'intégrité d'un service SBAS prédéterminé et élaborent les corrections d'erreur ionosphérique servant au calcul d'interpolation des erreurs effectués par les terminaux utilisateurs suivant la norme définissant les algorithmes de fonctionnement desdits terminaux utilisateurs.

Le calcul du terme $\sigma_{MOPS}$ intervenant dans la construction du GIVE initial et mis en oeuvre par le deuxième procédé 302 utilise à l'instar du premier procédé d'ajustement des GIVE finaux une méthode d'interpolation inverse des IPP vers les IGP de manière à assurer ici la répartition équitable des résidus, similaire à celle utilisée pour la détermination des $\Delta_{UVDE}$ des IGP, est maintenant décrite.

Cette méthode de calcul reprend donc largement le concept de répartition utilisé dans le cadre de la première invention. Par ailleurs, la construction finale du $\sigma_{MOPS}$ est assurée par un calcul optimal reprenant l'ensemble des résidus pour lesquels l'IGP concerné est intervenu, ce qui permet un ajustement optimal du calcul du $\sigma_{MOPS}$.

Comme pour le calcul des $\Delta_{UVDE}$ des IGP, nous avons trouvé ici la méthode assurant l'ajustement optimal de la valeur de $\sigma_{MOPS}$ quelle que soit la configuration des IPP autours des IGP.

Suivant la Figure 11, le procédé de calcul des écarts-type appelés $\sigma_{MOPS}$, ou des variances $\sigma_{MOPS}^2$ des résidus, associés à un premier ensemble de points IGPj d'une grille ionosphérique de correction d'une zone de service d'un système SBAS est mis en oeuvre par un ou plusieurs calculateurs, à partir d'une part d'informations de corrections d'erreur ionosphérique élaborées pour les dits points IGPj du premier ensemble, j désignant un indice entier d'identification et de parcours desdits points IGPi d'une portion de la grille ionosphérique, structurée en un réseau maillé de cellules ayant une forme prédéterminée et correspondant à la zone de service SBAS, et à partir d'autre part d'informations de mesures de pseudo-distances d'un deuxième ensemble de points de percement de contrôle IPPi, contenus dans les cellules de la portion de service de la grille ionosphérique, les mesures de pseudo-distances étant effectuées par des stations de contrôle et de télémesures dénommées RIMS.

Les points IGPj de la portion de grille ionosphérique correspondant à la couverture de la zone de service SBAS, formant un réseau maillé dont les mailles ont une même forme prédéterminée, cette forme étant comprise dans les formes triangulaires et les formes quadrilatères, de préférence les formes rectangulaires, carrées ou en losange.

La fourniture des d'informations de corrections d'erreur ionosphérique élaborées pour lesdits points IGPj du premier ensemble et des informations de mesures de pseudo-distances du deuxième ensemble de points de percement de contrôle IPPi est mise en oeuvre au cours d'une étape préalable d'élaboration et de fourniture desdites informations 304 formant une étape d'initialisation 304 du deuxième procédé de calcul optimal des $\sigma_{MOPS}$.

A l'inverse de ce qui est fait dans le procédé de l'état de l'art, le deuxième procédé 302 selon l'invention n'effectue pas de calcul de écarts-type appelés $\sigma_{MOPS}$ par IGP en parcourant une boucle de parcours des IGP sur le premier ensemble, mais effectue des tests de vérification d'intégrité par IPP en parcourant une boucle globale 306 de parcours des IPPi sur le deuxième ensemble.

Les IPPi du premier ensemble sont partitionnés en leurs cellules ou mailles d'appartenance et la boucle globale 306 de parcours des IPPi comporte une première de boucle 208 de parcours des cellules de la portion de grille selon un ordre ou un motif de parcours prédéterminé, et comporte, imbriquée dans la première boucle 308 de parcours des cellules, une deuxième boucle locale 309 de parcours des IPPi appartenant à une même cellule de la portion de grille ionosphérique.

Le procédé 302 de calcul optimal des écarts-type $\sigma_{MOPS}$ par finaux comprend un ensemble d'étapes exécutées après l'étape préalable 304.

Dans une première étape 310, une première cellule de début et d'initialisation de première boucle 308 est sélectionnée selon le rang initial qu'elle occupe dans le motif de parcours prédéterminé des cellules. L'indice de parcours de la première boucle étant désigné par m, l'indice m est mis à 1 et correspond au rang initial 1 de la première cellule du motif.

Puis, pour chaque IPPi contenu dans la cellule de rang m actuel dans l'ordre de parcours de la première boucle, les étapes suivantes sont exécutées.

Dans une deuxième étape 312, pour l'IPPi pertinent de rang i contenu dans la cellule de rang m actuel, un résidu, désigné par Res$_i$, ramené à la verticale, est calculé suivant l'équation #21:

$$\text{Res}_i = \frac{\text{STEC}_i - \text{UISD}_i}{F_{pp\,standard}}$$

dans lequel :

•- STECi désigne le délai ionosphérique de la ligne de vue réelle, donc fonction de l'élévation ;
•- UISDi désigne le délai ionosphérique vertical interpolé suivant le standard à partir des GIVDk des IGPk de la maille ou cellule entourant l'IPPi ;
•- $F_{pp\,standard}$ désigne la fonction de rabattement standard du délai ionosphérique en fonction de l'élévation de la ligne de vue.

Dans la même deuxième étape 312, le carré du résidu Res$_i^2$ est calculé.

Puis, dans une troisième étape 314, le carré du résidu calculé Res$_i^2$ est réparti ou distribué entre les IGPj ayant servi au calcul de l'UISDi de l'IPPi considéré.

Etant donné que le carré du résidu d'un IPPi est obtenu par interpolation, cette interpolation étant normalisée selon une fonction normalisée définie par le standard RTCA DO-229E, il faut donc inverser cette interpolation pour redistribuer de manière parfaitement conforme le carré du résidu Res$_i^2$, calculé précédemment dans la deuxième étape 312.

Le carré du résidu Res$_i^2$ doit être régi par l'équation #22 suivante:

$$\text{Res}_i^2 = \sum_{k=1}^{N_{IGP}} w_k \cdot \Delta_{Resk}^2$$

dans laquelle

•- $N_{IGP}$ est le nombre d'IGPs de la maille de forme prédéterminée utilisés par le calcul de Res$_i^2$ de l'IPPi considéré, ce nombre pouvant être 3 ou 4 en fonction du type de maille utilisée ;
•- k désigne un indice de numérotation dans la maille contenant l'IPPi des IGPs de ladite maille,
•- $w_k$ le poids de l'IGPk calculé par application du standard suivant la méthode de calcul défini dans le standard.

Cette interpolation étant une interpolation barycentrique, la somme des poids $w_k$ est égale à 1, c'est dire vérifie la relation : $\sum_{k=1}^{N_{IGP}} w_k = 1$

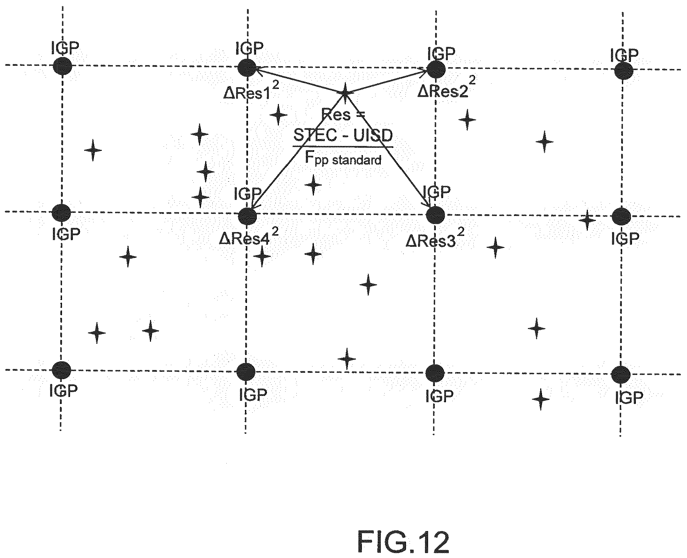

La troisième étape 314 est un procédé de détermination des valeurs de $\Delta_{Resk}^2$ à attribuer respectivement aux IGPk de l'IPPi considéré tels que décrits sur la Figure 12, lequel procédé utilise la méthode MC des Moindres Carrés pour assurer la réalisation de cette partition quelles que soient les conditions.

Une équation d'observation est définie par l'expression :

$$Xi = Hi.Yi$$

$$(\text{équation #23})$$

dans laquelle

•- Hi = [$w_1$ $w_2$ $w_3$ $w_4$] désigne un vecteur-ligne à quatre composantes lorsque quatre IGPs ont été utilisés pour réaliser l'interpolation de l'IPPi considéré, chaque $w_k$ correspondant au poids d'un $IGP_K$ obtenu avec la méthode de calcul définie ici par la norme RTCA DO-2290 du système EGNOS, toutes versions comprises jusqu'à la version actuelle E, pour l'IPPi considéré ;

•- $Yi = \begin{bmatrix} \Delta_{Res1}^2 \\ \Delta_{Res2}^2 \\ \Delta_{Res3}^2 \\ \Delta_{REes4}^2 \end{bmatrix}$ désigne un vecteur-colonne à quatre composantes

de la répartition du carré du résidu $Res_i^2$ à répartir sur les quatre IGPk lorsque la maille de l'IPPi considéré comporte quatre IGPs, comme résultat de la résolution de l'équation ;

•- $Xi = Res_i^2$ désigne la quantité à répartir calculée dans la deuxième étape 312.

Il est à remarquer que le cas où seuls trois IGPs appartenant à une maille triangulaire sont utilisés pour le calcul de l'UISDi de l'IPPi considéré, il suffit de réadapter les tailles des vecteurs Hi et Yi, Hi ayant alors une taille [3,1] et Yi une taille [1,3].

La méthode MC des Moindres Carrés mise en oeuvre dans la troisième étape détermine le vecteur-colonne Yi et résout l'équation d'observation à l'aide de la formule :

$$Yi = Hi^t.(Hi.Hi^t)^{-1}.Res_i^2$$

$$(\text{équation #24})$$

Ensuite dans une quatrième étape 316, un coefficient de pondération pi comme inverse d'un poids est calculé, ce coefficient étant représentatif de la qualité de la mesure du STECi redressé en VTECi par la division avec la fonction de rabattement de l'IPPi considéré, et exprimé suivant la formule suivante :

$$p_i = \frac{\sigma_{VTEC_i}^2}{\sigma_{VTEC\ NOMINAL}^2}$$

dans laquelle

•- $\sigma_{VTEC_i}^2$ désigne le bruit de mesure de la pseudo-distance mesuré par le terminal de mesure pour l'IPPi considéré, et
•- $\sigma_{VTEC_i\ NOMINAL}^2$ désigne un bruit de mesure nominal de référence du terminal de mesure.

Les carrés des résidus $\Delta_{Resk}^2$ et le poids 1/pi associés à l'IPPi considéré sont enregistrés dans une mémoire de sauvegarde.

Puis, dans une cinquième étape 318, il est vérifié si tous les IPPi contenus dan la cellule de rang m actuel ont été testés.

Si tous les IPPi de la cellule de rang m actuel n'ont pas été testés, un IPPi restant non testé de la cellule de rang m actuel est testé dans la deuxième boucle de parcours local, l'indice i de l'IPPi non testé devenant le nouvel indice de l'IPPi à tester, et les deuxième, troisième, quatrième, cinquième étapes sont répétées.

Si tous les IPPi de la cellule de rang m actuel ont été testés, une sixième étape 320 est exécutée au cours de laquelle le rang m de parcours des cellules suivant le motif prédéterminé est incrémenté d'une unité.

Après la sixième étape 320, une septième étape 322 de test de fin de la première boucle est mise en oeuvre au cours de laquelle il est vérifié si l'indice m incrémenté de parcours des cellules dépasse le rang de la dernière cellule du motif de parcours.

Lorsque l'indice m incrémenté de parcours des cellules ne dépasse pas le rang de la dernière cellule du motif de parcours, c'est-à-dire lorsque l'indice de parcours incrémenté m est inférieur ou égal à l'indice de parcours de la dernière cellule du motif, i.e. la cellule du motif programmée pour être balayée en dernier, l'indice incrémentée m de parcours de la première boucle devient l'indice actuel de parcours de la première boucle, pour chaque IPPi contenu dans la cellule de rang m actuel dans l'ordre de parcours de la première boucle, les étapes de la deuxième boucle locale sont exécutées à nouveau.

Lorsque l'indice m incrémenté de parcours des cellules dépasse le rang de la dernière cellule du motif de parcours, une huitième étape 324 suivi d'une neuvième étape 326 de calcul des écarts-type des IGP de la zone de service est mise en oeuvre pour chaque IGP à partir d'une liste propre associée contenant les portions de résidu des IPP ayant généré un résidu pour l'IGP considéré et les poids $1/p$ a associés.

En considérant un IGP donné, l'écart-type $\sigma_{MOPS}$ est calculé dans la huitième étape 324 suivant l'équation #25:

$$\sigma_{MOPS} = \sqrt{\frac{1}{P_S} \times \sum_{i=1}^{Nipp} \frac{1}{p_i} \times \Delta_{Res_{ippi}}^{2}}$$

avec :

•- $P_S$, la somme des poids normalisés $1/p_i$ de chaque résidu disponibles pour l'IGP considéré suivant :

$$Ps = \sum_{i=1}^{N_{ipp}} \frac{1}{p_i}$$

•- $N_{ipp}$ étant le nombre des IPP ayant généré un résidu pour l'IGP concerné,

•- $\Delta_{Res_{ippi}}^{2}$ le résidu interpolé en inverse à l'IGP considéré pour l'IPPi faisant partie des IPP ayant généré un résidu pour l'IGP concerné.

A l'inverse des procédés classiquement utilisés, les poids $1/pi$ sont définis ici uniquement en fonction de la qualité de la mesure STEC obtenue sur chaque IPP ayant généré un résidu pour l'IGP concerné.

Dans la neuvième étape 326, la valeur du $\sigma_{MOPS}$ calculée dans la huitième étape 324 pour l'IGP considéré est dilatée suivant le nombre d'IPPi ayant contribué à son estimation par un facteur de Student permettant de définir l'indice de confiance de la valeur mesurée par rapport à une hypothèse gaussienne pour obtenir une nouvelle valeur de $\sigma_{MOPS}$ suivant l'expression :

$$\sigma_{MOPS} \leftarrow \left(\frac{t_{v_k, 0.99999995}}{5.33}\right) \times \sigma_{MOPS}$$

avec :

•- $t_{v_k, 0.99999995}$, le facteur de Student en fonction de $v_k$, le degré de liberté (ici c'est le nombre d'IPP) permettant de borner une erreur avec une probabilité de $10^{-7}$ requise par le standard aéronautique ; et

•- 5.33 qui est la valeur obtenue lorsque l'hypothèse gaussienne est appliquée, pour la même probabilité que celle définie ci-dessus, c'est à dire 0,999999995 de confiance.

Lorsque la boucle de calcul des écarts-type $\sigma_{MOPS}$ des IGP a parcouru tous les IGP de la zone du service SBAS, le deuxième procédé de calcul des $\sigma_{MOPS}$ est arrêté.

En variante et de manière équivalente à l'exécution des huitième et neuvième étapes 324, 326, pour un IGP considéré il est possible de calculer le $\sigma_{MOPS}$ à partir d'une méthode de Moindre carré pondéré utilisant comme inverse pi de poids pour chaque IPPi pertinent ayant généré un résidu pour l'IGP considéré, l'expression d'un tel inverse poids pouvant être :

$$p_i = \frac{1}{w_i} \times \sigma_{VTEC_i}^2 \quad \text{ou} \quad p_i = \frac{1}{w_i} \times \frac{\sigma_{VTEC_i}^2}{\sigma_{VTEC\,NOMINAL}^2} \; ,$$

l'inverse pi du poids étant représentative de la qualité de mesure associée à l'IPP considéré, et $w_i$ étant le poids de l'IPPi suivant l'IGP tel que défini par le standard DO-229.

Le poids $w_i$ peut également être calculé et modifié en un poids fonction de l'importance que l'on souhaite accorder au positionnement des IPP. Par exemple, une pondération notée $w_{i\,center\,norm}$, atteignant le poids le plus important au centre de la cellule utilisée pour l'interpolation bilinéaire, est appliquée, car c'est ici que sont supposées être concentrées le maximum des erreurs d'interpolation.

Le poids $w_{i\,center\,norm}$ alors utilisé, correspondant à l'ajustement au centre des cellules, est calculé à partir des poids $w_i$ déterminées suivant le standard MOPS-DO-229» comme suit.

Un premier poids modifié $w_{i\,center\,ini}$ est calculé pour chaque poids non nul de l'IPP i ayant été utilisé pour l'interpolation suivant la formule :

$$w_{i\,center\,ini} = \left| w_i - \frac{1}{N_{IGP}} \right|,$$

Puis, le poids $w_{i\,center\,norm}$ utilisé est calculé suivant la formule :

Si $w_i = 0$, alors l'IPP n'est pas utilisé pour le calcul du $\sigma_{MOPS}$ de l'IGP considéré

Si $0 < w_i < \frac{1}{N_{IGP}}$, alors $w_{i\,center\,norm} = w_i$

Sinon $w_{i\,center\,norm} = 1 - \frac{w_{i\,center\,ini}}{\sum_{i=1}^{N_{IGP}} w_{i\,center\,ini}}$, dans laquelle $N_{IGP}$ correspond au nombre d'IGP ayant servi dans l'interpolation du délai ionosphérique à l'IPPi. Dans ce cas l'expression de l'inverse pi de poids pour chaque IPPi pertinent ayant généré un résidu pour l'IGP considéré, s'écrit :

$$p_i = \frac{1}{w_{i\,center\,norm}} \times \sigma_{VTEC_i}^2 \quad \text{ou} \quad p_i = \frac{1}{w_{i\,center\,norm}} \times \frac{\sigma_{VTEC_i}^2}{\sigma_{VTEC\,NOMINAL}^2} \; .$$

En désignant par P une matrice de pondération, diagonale et de dimension égale au nombre $N_{ipp}$ des IPP ayant généré des résidus pour le calcul du $\sigma_{MOPS}$ de l'IGP considéré, on pose :

$$P = \begin{bmatrix} \dfrac{1}{p_1} & \cdots & 0 \\ \vdots & \ddots & \vdots \\ 0 & \cdots & \dfrac{1}{p_{N_{ipp}}} \end{bmatrix}$$

On désigne par K la matrice d'observation de taille $N_{ipp} \times 1$ et définie par : $K = [1...1]$

Avec la matrice des résidus de taille $1 \times N_{ipp}$ noté Z et définie par :

$$Z = \begin{bmatrix} \Delta_{Res_{ipp\,1}}^2 \\ \vdots \\ \Delta_{Res_{ipp\,N_{ipp}}}^2 \end{bmatrix}$$

le calcul de l'écart-type $\sigma_{MOPS}$ de l'IGP considéré s'écrit finalement de manière équivalent par l'expression :

$$\sigma_{MOPS} = \left(\frac{t_{v_k,0.99999995}}{5.33}\right) . \sqrt{(K.P.K^t)^{-1}.K.P.X^t}$$
(équation #25)

avec :

- $t_{v_{ipp},0.99999995}$, le facteur de Student ayant ($N_{ipp}$ - 1) degrés de liberté pour un risque à $10^{-7}$.

Il est à remarquer que les facteurs de dilatation considérés ci-dessus pour les différentes formes de calcul du $\sigma_{MOPS}$ correspondent au cas particulier d'un niveau de confiance pris égal à $10^{-7}$, convenant à certains services aéronautiques.

De manière générale, le facteur de dilatation de $\sigma_{MOPS}$, noté $d_k$ est égal à $\left(\frac{t_{v_k,\alpha}}{G(p)}\right)$ avec :

•- $t_{v_k,\alpha}$ désignant le facteur de Student fonction de $v_k$ le degré de liberté et fonction de la probabilité de confiance $\alpha$, ledit facteur de Student $t_{v_k,\alpha}$ permettant de borner une erreur avec un niveau de confiance prédéterminé (1-p) et requis par le service SBAS, la probabilité de confiance $\alpha$ étant lié au niveau de confiance (1-p) par la relation $\alpha = 1 - \frac{1}{2}.p$ , et le degré de liberté $v_k$ étant égal ici au nombre d'IPP ayant généré un résidu pour l'IGP concerné moins un ;
•- $G(p)$ est la valeur obtenue lorsque l'hypothèse gaussienne est appliquée pour la même probabilité de confiance (1-p) ou pour la même probabilité p du risque que l'on souhaite borner, c'est à dire la limite du facteur de Student $t_{v_k,\alpha}$ lorsque le degré de liberté $v_k$ tend vers l'infini ; $G(p)$ est définie par l'expression $G(p) = erf^{-1}(1-p) \times \sqrt{2}$ , $erf^{-1}(.)$ désignant la fonction réciproque de la fonction erreur et (1-p) désignant le niveau de confiance requis.

En variante de l'exécution des huitième et neuvième étapes 324, 326, et d'une manière qui simplifie le calcul de l'écart-type $\sigma_{MOPS}$, un tri est effectué sur les résidus calculés par la méthode d'interpolation inverse pour un IGP considéré en fonction de la qualité de la mesure du résidu $Red_i^2$ associé à un IPPi donné. Cela permet de simplifier le calcul de l'écart-type $\sigma_{MOPS}$ et d'alléger la liste des carrés de résidus interpolés en inverse à l'IGP considéré. Dans cette méthode, la maîtrise parfaite de la quantité de résidu appliquée à chaque IGP grâce à l'application de la méthode d'interpolation inverse est conservée.

Après avoir effectué un tri pertinent des résidus appliqués aux IGP concerné, l'écart-type $\sigma_{MOPS}$ est calculé suivant l'équation :

$$\sigma_{MOPS\_simp} = \sqrt{\frac{1}{N_{ipp\_fil}} \times \sum_{i=1}^{N_{ipp\_fil}} \Delta_{Res_{ipp\,i}}{}^2}$$

avec :

•- $N_{ipp\_fil}$ étant le nombre des IPP ayant généré un résidu pour l'IGP concerné et dont la qualité de mesure est suffisante,
•- $\Delta_{Res_{ipp\,i}}{}^2$ étant le carré d'un résidu appliqué à l'IGP considéré et généré par un IPPi trié, c'est-à-dire ayant une mesure de qualité.

En reprenant la formulation matricielle précédente, cela donne dans le cas particulier d'un niveau de confiance égal à $10^{-7}$ :

$$\sigma_{MOPS} = \left(\frac{t_{v_k, 0.99999995}}{5.33}\right) . \sqrt{(K.K^t)^{-1}.K.X^t}$$

(équation #26)

La méthode d'interpolation inverse, mise en oeuvre dans le premier procédé 202 d'ajustement des GIVE, est ici également utilisé dans le deuxième procédé 302 de calcul optimal du terme $\sigma_{MOPS}$ qui permet de compenser les écarts induits par le standard utilisé dans le calcul de délais ionosphérique au niveau de l'utilisateur. Appliquée dans ce deuxième procédé, la méthode d'interpolation inverse permet de garantir une répartition correcte des résidus estimés de façon à donner à chaque IGP la valeur de résidu en fonction de la contribution effective de chaque IPP vis-à-vis de cet IGP.

Un système SBAS d'augmentation à base de satellites pour augmenter les performances d'un système global de navigation par satellites GNSS, configuré pour exécuter le deuxième procédé de calcul optimal de la Figure 11, comprend des terminaux utilisateurs de service(s) SBAS, un ou plusieurs satellites d'augmentation des satellites du système GNSS et de diffusion de messages d'information aux terminaux utilisateurs, une ou plusieurs stations d'observation RIMS munis de récepteurs GNSS, et un ou plusieurs ou calculateurs.

Le système SBAS est configuré pour calculer de manière optimale des variances des résidus d'un premier ensemble de points IGP d'une grille de correction ionosphérique d'une zone de service d'un système SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble.

Le ou les calculateurs électroniques du système SBAS sont configurés pour :

•- à partir d'informations prédéterminées de correction d'erreur ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, un résidu, désigné par Res$_i$, ramené à la verticale, suivant l'équation :

$$Res_i = \frac{STEC_i - UISD_i}{F_{pp\ standard}}$$

dans lequel :

•- STECi désigne le délai ionosphérique de la ligne de vue réelle mesuré par une station d'observation et fonction de l'élévation de ladite ligne de vue;
•- UISDi désigne le délai ionosphérique vertical interpolé suivant le standard du terminal utilisateur à partir des GIVDk des IGPk de la maille entourant l'IPPi ;
•- F$_{pp\ standard}$ désigne la fonction de rabattement standard du délai ionosphérique en fonction de l'élévation de la ligne de vue,

puis calculer le carré du résidu ;
et ensuite pour chaque point de percement d'observation IPPi du deuxième ensemble,

•- déterminer des valeurs d'incréments de variance $\Delta_{Resk}{}^2$ à attribuer respectivement aux IGPk de la maille m de l'IPPi considéré par une méthode d'interpolation inverse utilisant une méthode de Moindres Carrés dans laquelle un vecteur Yi de répartition du carré du résidu Res$_i{}^2$ de l'IPPi considéré est calculé suivant l'équation :

$$Yi = Hi^t . (Hi.Hi^t)^{-1} . Res_i{}^2$$

dans laquelle

•* H = [w$_1$ w$_2$, ... w$_{NIGP}$] désigne un vecteur-ligne à N$_{IGP}$ composantes pour réaliser l'interpolation de l'IPPi considéré; chaque composante $w_k$, k variant de 1 à $N_{IGP}$, correspondant au poids d'un IGP$_k$ obtenu avec la

méthode de calcul d'interpolation directe définie par le standard pour l'IPPi considéré ;

$$\bullet^* \ Yi = \begin{bmatrix} \Delta_{Res1}{}^2 \\ \Delta_{Res2}{}^2 \\ ... \\ \Delta_{ResNIGP}{}^2 \end{bmatrix}$$ désigne un vecteur-colonne à $N_{IGP}$ composantes de la répartition du carré du résidu

$Res_i{}^2$ à répartir sur les $N_{IGP}$ IGPk lorsque la maille de l'IPPi considéré comporte $N_{IGP}$ IGP, comme résultat de la résolution de l'équation ;

$\bullet^* \ Res_i^2$ désigne le carré du résidu à répartir, puis

$\bullet$- déterminer un coefficient de pondération pi comme inverse d'un poids, ce coefficient de pondération étant représentatif de la qualité de la mesure du STECi redressé en VTECi par la division avec la fonction de rabattement de l'IPPi considéré, et exprimé suivant la formule suivante :

$$p_i = \frac{\sigma_{VTEC_i}{}^2}{\sigma_{VTEC\ NOMINAL}{}^2}$$

dans laquelle

$\bullet$- $w_i$ désigne le poids de l'IPPi suivant l'IGP tel que défini par le standard DO-229.
$\bullet$- $\sigma_{VTEC_i}{}^2$ désigne le bruit de mesure de la pseudo-distance mesuré par le terminal de mesure pour l'IPPi considéré, et
$\bullet$- $\sigma_{VTEC_i}{}^2$ désigne un bruit de mesure nominal de référence du terminal de mesure ;

ensuite, après avoir calculé tous les Yi et pi correspondant au premier ensemble des points de percement IPPi observé,
pour chaque IGP, calculer une variance de résidu non dilaté suivant l'équation :

$$\sigma_{MOPS} = \sqrt{\frac{1}{Ps} \times \sum_{i=1}^{Nipp} \frac{1}{p_i} \times \Delta_{Res_{ipp\ i}}{}^2}$$

avec :

$\bullet$- Ps, la somme des poids normalisés $1/p_i$ de chaque résidu disponibles pour l'IGP considéré suivant :

$$Ps = \sum_{i=1}^{N_{ipp}} \frac{1}{p_i}$$

$\bullet$- $N_{ipp}$ étant le nombre des IPP ayant généré un résidu pour l'IGP concerné,
$\bullet$- $\Delta_{Res_{ipp\ i}}{}^2$ le résidu interpolé en inverse à l'IGP considéré pour l'IPPi faisant partie des IPP ayant généré un résidu pour l'IGP concerné.

En variante, le système SBAS d'augmentation à base de satellites est configuré pour exécuter une des variantes du deuxième procédé de calcul optimal, décrites ci-dessus.

## Revendications

1. Procédé d'ajustement optimal de bornes d'erreurs de correction ionosphérique GIVE d'un premier ensemble de points IGP d'une grille de correction ionosphérique d'une zone de service d'un système d'augmentation à base de satellites SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble,
le procédé d'ajustement optimal des bornes d'erreur comprenant les étapes consistant à :

•- calculer (212) par au moins un calculateur électronique, à partir d'informations prédéterminées de corrections d'erreurs ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, une innovation désignée par stdUIVDerror$_i$ , suivant l'expression :

$$stdUIVDerror_i = \frac{|VTEC_i - UIVD_i|}{\sqrt{\sigma_{VTEC_i}{}^2 + \sigma_{UIVE_i}{}^2}}$$

dans laquelle :

•\* $VTEC_i$ désigne le délai ionosphérique vertical mesuré à l'IPPi,
•\* $UIVD_i$ désigne le délai ionosphérique vertical interpolé à partir des GIVDj des IGPj de la maille de rang m entourant l'IPPi concerné;
•\* $\sigma_{VTEC_i}$ désigne l'écart-type du bruit de mesure à l'IPPi,
•\* $\sigma_{UIVE_i}$ désigne l'écart-type issu des GIVE des IGPj de la maille de rang m ayant participé à l'interpolation de l'UIVDi de l'IPPi concerné ; puis
•- lorsque l'innovation de l'IPPi parcouru dans la maille actuelle de rang m est strictement supérieur à un seuil théorique *M*axThd correspondant à niveau de confiance et d'intégrité prédéterminé requis par le service SBAS, calculer (218) un incrément de variance $\Delta_{UIVE_i}{}^2$ qu'il faudrait rajouter au $\sigma_{UIVE_i}{}^2$ sur l'IPPi considéré pour qu'il recouvre le niveau d'intégrité requis suivant l'équation :

$$\Delta_{UIVE_i}{}^2 = \left(\beta + \sigma_{UIVE_i}{}^2\right) \times (K_{fact}{}^2 - 1)$$

dans laquelle :

•- $\sigma_{UIVE_i}$ désigne l'écart-type issu des GIVE des IGPj de la maille de rang m ayant participé à l'interpolation de l'UIVDi de l'IPPi concerné ;
•- $\beta$ et $K_{fact}{}^2$ désignent respectivement un premier terme et un deuxième terme,
Le premier terme $\beta$ étant déterminé selon l'équation:

$$\beta = \sigma_{VTEC_i}{}^2$$

où $VTEC_i$ désigne le délai ionosphérique vertical mesuré à l'IPPi considéré, et
le deuxième terme $K_{fact}{}^2$ étant déterminé selon l'équation :

$$K_{fact}{}^2 = \frac{stdUIVDerror_i{}^2}{(SafMarg \times MaxThd)^2}$$

•SafMarg désignant la marge d'intégrité en pourcentage du seuil maximum toléré que l'on souhaite générer, supérieure à zéro et strictement inférieur à 1, et configurée en fonction d'une marge de garantie d'intégrité en valeur relative prédéterminée, notée X et exprimée en pourcentage, suivant l'expression : SafMarg = (1 - X) ;

le procédé d'ajustement optimal étant **caractérisé en ce qu'**il comprend en outre les étapes (220, 222) consistant à, lorsque l'innovation de l'IPPi parcouru dans la maille actuelle de rang m est strictement supérieur à un seuil théorique *M*axThd :

• - déterminer (220) des valeurs d'incréments de variance $\Delta_{GIVE_k}{}^2$ à attribuer respectivement aux IGPk de la maille de l'IPPi considéré par une méthode d'interpolation inverse utilisant une méthode de Moindres Carrés de sorte à répartir l'incrément de

variance $\Delta_{UIVE_i}^2$ de l'IPPi suivant la relation :

$$\Delta_{UIVE_i}^2 = \sum_{k=1}^{N_{IGP}} w_k.\Delta_{GIVE_k}^2$$

dans laquelle

•- $N_{IGP}$ est le nombre d'IGPs de la maille de forme prédéterminée utilisés par le calcul de l'UIVDi et UIVEi de l'IPPi considéré ;
•- k désigne un indice de numérotation dans la maille contenant l'IPPi des IGP de ladite maille,
•- $w_k$ désignent les poids respectifs des IGPk, k variant de 1 à $N_{IGP}$, calculés par application du standard GNSS suivant une fonction du standard GNSS qui dépend de la distance entre l'IPPi et l'IGPk , la somme des poids $w_k$ étant égale à un ; puis
•- pour chaque IGPk de la maille m à laquelle appartient l'IPPi considéré, mettre à jour (222) la variance $\sigma_{GIVE_k}$ dudit IGPk en remplaçant la valeur actuelle $\sigma_{GIVE_k}$ du GIVEk par une nouvelle valeur égale à $\sqrt{\sigma_{GIVE_k}^2 + \Delta_{GIVE_k}^2}$ .

2. Procédé d'ajustement optimal de bornes d'erreurs de correction ionosphérique GIVE selon la revendication 1, dans lequel l'étape de détermination (220) des valeurs d'incréments de variance $\Delta_{GIVE_k}^2$ à attribuer respectivement aux IGPk de la maille de l'IPPi considéré est mise en oeuvre par une méthode de Moindre Carré Classique dans laquelle un vecteur Yi de répartition du $\Delta_{UIVE_i}^2$ de l'IPPi considéré sur les IGPk associés est calculé suivant l'équation :

$$Yi = Hi^t.(Hi.Hi^t)^{-1}.\Delta_{UIVE_i}^2$$

dans laquelle

•- Hi = [$w_1$ $w_2$ ... $w_{NIGP}$] désigne un vecteur-ligne à $N_{IGP}$ composantes pour réaliser l'interpolation de l'IPPi considéré, chaque composante $w_k$, k variant de 1 à $N_{IGP}$, correspondant au poids d'un IGP$_k$ obtenu avec la méthode de calcul d'interpolation directe définie par le standard pour l'IPPi considéré ;

•- $Yi = \begin{bmatrix} \Delta_{GIVE_1}^2 \\ \Delta_{GIVE_2}^2 \\ ... \\ \Delta_{GIVE_{NIGP}}^2 \end{bmatrix}$ désigne un vecteur-colonne à $N_{IGP}$ composantes de la répartition de l'incrément de

variance $\Delta_{UIVE_i}^2$ à répartir sur les $N_{IGP}$ IGPk lorsque la maille de l'IPPi considéré comporte $N_{IGP}$ IGPs, comme résultat de la résolution de l'équation ;
•- $\Delta_{UIVE_i}^2$ désigne l'incrément de variance à répartir.

3. Procédé d'ajustement optimal de bornes d'erreurs de correction ionosphérique GIVE selon la revendication 1, dans lequel l'étape de détermination (220) des valeurs d'incréments de variance $\Delta_{GIVE_k}^2$ à attribuer respectivement aux IGPk de la maille de l'IPPi considéré est mise en oeuvre par une méthode de moindre carré ajustée par un niveau de confiance 1-p dans laquelle un vecteur Yi de répartition du $\Delta_{UIVE_i}^2$ de l'IPPi considéré sur les IGPk associés est calculé suivant l'équation :

$$Yi = T_i^{CALSQ}.Hi^t.(Hi.Hi^t)^{-1}.\Delta_{UIVE_i}^2$$

dans laquelle

•- $Yi = \begin{bmatrix} \Delta_{GIVE_1}{}^2 \\ \Delta_{GIVE_2}{}^2 \\ ... \\ \Delta_{GIVE_{NIGP}}{}^2 \end{bmatrix}$ désigne un vecteur-colonne à $N_{IGP}$ composantes de la répartition de l'incrément de

variance $A_{UIVE_i}{}^2$ à répartir sur les $N_{IGP}$ IGPk lorsque la maille de l'IPPi considéré comporte $N_{IGP}$ IGP, comme résultat de la résolution de l'équation ;

•- Hi = [$w_1$ $w_2$ ... $w_{NIGP}$] désigne un vecteur-ligne à $N_{IGP}$ composantes pour réaliser l'interpolation de l'IPPi considéré, chaque composante $w_k$, k variant de 1 à $N_{IGP}$, correspondant au poids d'un $IGP_K$ obtenu avec la méthode de calcul d'interpolation directe définie par le standard pour l'IPPi considéré ; et

•- $T_i{}^{CALSQ}$ est une matrice carré d'inflation de rang $N_{IGP}$ définie par :

$$T_i^{CALSQ} = \frac{1}{G(p)^2} \begin{bmatrix} t_{v_1,\alpha}{}^2 & 0 & ... & 0 \\ 0 & t_{v_2,\alpha}{}^2 & ... & 0 \\ ... & ... & ... & ... \\ 0 & 0 & ... & t_{v_4,\alpha}{}^2 \end{bmatrix}$$

avec

$t_{v_k,\alpha}$ désignant le facteur de Student associé l'IGPk de rang k fonction de $v_k$ le degré de liberté et fonction de la probabilité de confiance $\alpha$, ledit facteur de Student $t_{v_k,\alpha}$ permettant de borner une erreur avec un niveau de confiance (1-p) prédéterminé et requis par le service SBAS, la probabilité de confiance $\alpha$ étant lié au niveau de confiance par la relation $\alpha = 1 - \frac{1}{2}.p$ , et le degré de liberté $v_k$ étant égal ici au nombre d'IPP ayant généré un résidu pour l'IGPk concerné moins un ; et

$G(p)$ désignant la valeur obtenue lorsque l'hypothèse gaussienne est appliquée pour la même probabilité de confiance (1-p) que celle utilisée pour le calcul de $\alpha$, c'est-à-dire la limite du facteur de Student $t_{v_k,\alpha}$ lorsque le degré de liberté $v_k$ tend vers l'infini ; et

.- $\Delta_{UIVE_i}{}^2$ désigne l'incrément de variance à répartir.

4. Procédé d'ajustement optimal de bornes d'erreurs de correction ionosphérique GIVE selon la revendication 1, dans lequel l'étape de détermination (220) des valeurs d'incréments de variance $\Delta_{GIVE_k}{}^2$ à attribuer respectivement aux IGPk de la maille de l'IPPi considéré est mise en oeuvre par une méthode de moindre carré pondéré par un niveau de confiance niv_conf dans laquelle un vecteur Yi de répartition du $\Delta_{UIVE_i}{}^2$ de l'IPPi considéré sur les IGPk associés est calculé suivant l'équation :

$$Yi = Pi.Hi^t.(Hi.Pi.Hi^t)^{-1}.\Delta_{UIVE_i}{}^2$$

dans laquelle

•- $Yi = \begin{bmatrix} \Delta_{GIVE_1}{}^2 \\ \Delta_{GIVE_2}{}^2 \\ ... \\ \Delta_{GIVE_{NIGP}}{}^2 \end{bmatrix}$ désigne un vecteur-colonne à $N_{IGP}$ composantes de la répartition de l'incrément de

variance $\Delta_{UIVE_i}{}^2$ à répartir sur les $N_{IGP}$ IGPk lorsque la maille de l'IPPi considéré comporte $N_{IGP}$ IGP, comme résultat de la résolution de l'équation ;

•- Hi = [$w_1$ $w_2$ ... $w_{NIGP}$] désigne un vecteur-ligne à $N_{IGP}$ composantes pour réaliser l'interpolation de l'IPPi considéré, chaque composante $w_k$, k variant de 1 à $N_{IGP}$, correspondant au poids d'un $IGP_k$ obtenu avec la méthode de calcul d'interpolation directe définie par le standard pour l'IPPi considéré ; et

•- Pi est une matrice carré de pondération diagonale de rang $N_{IGP}$ définie par :

$$Pi = \begin{bmatrix} q_1 & 0 & ... & 0 \\ 0 & q_2 & ... & 0 \\ ... & ... & ... & ... \\ 0 & 0 & ... & q_{N_{IGP}} \end{bmatrix}$$

avec $q_k = \left(\dfrac{t_{v_k,\alpha}}{G(p)}\right)^2$ associé à l'IGPk, k variant de 1 à $N_{IGP}$,

$t_{vk,\alpha}$ désignant le facteur de Student associé l'IGPk de rang k fonction de $v_k$ le degré de liberté et fonction de la probabilité de confiance $\alpha$, ledit facteur de Student $t_{v_k,\alpha}$ permettant de borner une erreur avec un niveau de confiance (1-p) prédéterminé et requis par le service SBAS, la probabilité de confiance $\alpha$ étant lié au niveau de confiance par la relation $\alpha = 1 - \dfrac{1}{2}.p$ , et le degré de liberté $v_k$ étant égal ici au nombre d'IPP ayant généré un résidu pour l'IGPk concerné moins un ; et
$G(p)$ désignant la valeur obtenue lorsque l'hypothèse gaussienne est appliquée pour la même probabilité de confiance (1-p) que celle utilisée pour le calcul de $\alpha$, c'est-à-dire la limite du facteur de Student $t_{v_k,\alpha}$ lorsque le degré de liberté $v_k$ tend vers l'infini ; et

•- $\Delta_{UIVE_i}{}^2$ désigne l'incrément de variance à répartir.

5. Procédé d'ajustement optimal de bornes d'erreurs de correction ionosphérique GIVE des IGP selon la revendication 1, dans lequel l'étape de détermination (220) des valeurs d'incréments de variance $\Delta_{GIVE_k}{}^2$ à attribuer respectivement aux IGPk de la maille de l'IPPi considéré est mise en oeuvre par une méthode de moindre carré pondéré par un niveau de confiance 1-p dans laquelle un vecteur Yi de répartition du $\Delta_{UIVE_i}{}^2$ de l'IPPi considéré sur les IGPk associés est calculé suivant l'équation :

$$Yi = Hi^t.\left(Hi.Hi^t\right)^{-1}.\left[\Delta_{UIVE_i}{}^2.\left(\frac{t_{Nb_{IPP\,MOYEN},\alpha}}{G(p)}\right)^2\right]$$

dans laquelle

•- $Yi = \begin{bmatrix} \Delta_{GIVE_1}{}^2 \\ \Delta_{GIVE_2}{}^2 \\ ... \\ \Delta_{GIVE_{NIGP}}{}^2 \end{bmatrix}$ désigne un vecteur-colonne à $N_{IGP}$ composantes de la répartition de l'incrément

de variance $\Delta_{UIVE_i}{}^2$ à répartir sur les $N_{IGP}$ IGPk lorsque la maille de l'IPPi considéré comporte $N_{IGP}$ IGP, comme résultat de la résolution de l'équation ;
•- $Hi = [w_1\ w_2\ ...\ w_{NIGP}]$ désigne un vecteur-ligne à $N_{IGP}$ composantes pour réaliser l'interpolation de l'IPPi considéré, chaque composante $w_k$, k variant de 1 à $N_{IGP}$, correspondant au poids d'un $IGP_K$ obtenu avec la méthode de calcul d'interpolation directe définie par le standard pour l'IPPi considéré ; et

$t_{Nb_{IPP\,MOYEN},\alpha}$ désignant un facteur de Student fonction de la probabilité de confiance $\alpha$, ledit facteur de Student $t_{Nb_{IPP\,MOYEN},\alpha}$ permettant de borner une erreur avec un niveau de confiance (1-p) prédéterminé et requis par le service SBAS, la probabilité de confiance $\alpha$ étant lié au niveau de confiance par la relation $\alpha = 1 - \dfrac{1}{2}.p$ , et le degré de liberté $Nb_{IPP\,MOYEN}$ étant un nombre calculé à partir de la somme pondérée du nombre d'IPP au voisinage des IGPk ayant servis à l'obtention de l'UIVDi et UIVEi de l'IPPi testé, suivant la formule :

$$Nb_{IPP\,MOYEN} = \frac{\sum_{k=1}^{N_{IGP}} w_k.(Nb_{IPP\,k} - 1)}{\sum_{k=1}^{N_{IGP}} w_k}$$

avec :

•- $w_k$, le poids de l'IGPk obtenu par application de la méthode d'interpolation définie par le standard RTCA DO-229D sur l'IPPi concerné pour l'obtention de son UIVDi et UIVEi ;
•- $Nb_{IPP\,k}$ correspond au nombre d'IPP situé autour de l'IGPk dans le voisinage constitué de la réunion de toutes les cellules contenant cet IGPk ; et

$G(p)$ désignant la valeur obtenue lorsque l'hypothèse gaussienne est appliquée pour la même probabilité de confiance (1-p) que celle utilisée pour le calcul de $\alpha$, c'est-à-dire la limite du facteur de Student $t_{v_k,\alpha}$ lorsque le degré de liberté $v_k$ tend vers l'infini ; et

•- $A_{UIVE_i}{}^2$ désigne l'incrément de variance à répartir.

6. Procédé d'ajustement optimal de bornes d'erreurs de correction ionosphérique GIVE selon l'une quelconque des revendications 1 à 5, dans lequel
La forme de chaque maille est une forme triangulaire et le nombre $N_{IGP}$ des IGP sommets de chaque maille et égale à 3, ou
La forme de chaque maille est la forme d'un quadrilatère, de préférence comprise parmi les formes d'un rectangle, d'un carré et d'un losange, et le nombre $N_{IGP}$ des IGP sommets de chaque maille et égale à 4.

7. Système SBAS d'augmentation à base de satellites pour augmenter les performances d'un système global de navigation par satellites GNSS,
le système SBAS comprenant des terminaux utilisateurs de service(s) SBAS, un ou plusieurs satellites d'augmentation des satellites du système GNSS et de diffusion de messages d'information aux terminaux utilisateurs, une ou plusieurs stations d'observation RIMS munis de récepteurs GNSS, et un ou plusieurs calculateurs,
le système SBAS étant configuré pour ajuster de manière optimale des bornes d'erreurs de correction ionosphérique, appelés GIVE finaux, d'un premier ensemble de points IGP d'une grille de correction ionosphérique d'une zone de service du système SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble, et
le système SBAS étant **caractérisé en ce que** le ou les calculateurs électroniques sont configurés pour :

•- à partir d'informations prédéterminées de correction d'erreur ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, une innovation désignée par stdUIVDerror$_i$, suivant l'expression :

$$\text{stdUIVDerror}_i = \frac{|VTEC_i - UIVD_i|}{\sqrt{\sigma_{VTEC_i}{}^2 + \sigma_{UIVE_i}{}^2}}$$

dans laquelle :

•* $VTEC_i$ désigne le délai ionosphérique vertical mesuré à l'IPP i,
•* $UIVD_i$ désigne le délai ionosphérique vertical interpolé à partir des GIVDj des IGPj de la maille de rang m entourant l'IPPi concerné;
•* $\sigma_{VTEC_i}$ désigne l'écart-type du bruit de mesure à l'IPPi,
•* $\sigma_{UIVE_i}$ désigne l'écart-type issu des GIVE des IGPj de la maille de rang m ayant participé à l'interpolation de l'UIVDi de l'IPPi concerné ; puis
•- lorsque l'innovation de l'IPPi parcouru dans la maille actuelle de rang m est strictement supérieur à un seuil théorique *M*axThd correspondant à un niveau de confiance ou d'intégrité (1-p) prédéterminé exigé par le service SBAS, calculer un incrément de variance $\Delta_{UIVE_i}{}^2$ qu'il faudrait rajouter au $\sigma_{UIVE_i}{}^2$ sur l'IPPi considéré pour qu'il recouvre le niveau d'intégrité requis suivant l'équation :

$$\Delta_{UIVE_i}{}^2 = \left(\beta + \sigma_{UIVE_i}{}^2\right) \times (K_{fact}{}^2 - 1)$$

dans laquelle :

- $\sigma_{UIVE_i}$ désigne l'écart-type issu des GIVE des IGPj de la maille de rang m ayant participé à l'interpolation de l'UIVDi de l'IPPi concerné ;
- $\beta$ et $K_{fact}^2$ désignent respectivement un premier terme et un deuxième terme,

Le premier terme $\beta$ étant déterminé selon l'équation:

$$\beta = \sigma_{VTEC_i}^2$$

où $VTEC_i$ désigne le délai ionosphérique vertical mesuré à l'IPPi considéré, et
le deuxième terme $K_{fact}^2$ étant déterminé selon l'équation :

$$K_{fact}^2 = \frac{stdUIVDerror_i^2}{(SafMarg \times MaxThd)^2}$$

- SafMarg désignant la marge d'intégrité en pourcentage du seuil maximum toléré que l'on souhaite générer, supérieure à zéro et strictement inférieure à 1, et configurée en fonction d'une marge de garantie d'intégrité en valeur relative prédéterminée, notée X et exprimée en pourcentage, suivant l'expression : SafMarg = (1 - X) ; puis

lorsque l'innovation de l'IPPi parcouru dans la maille actuelle de rang m est strictement supérieur à un seuil théorique $MaxThd$ :

- - déterminer des valeurs d'incréments de variance $\Delta_{GIVE_k}^2$ à attribuer respectivement aux IGPk de la maille de l'IPPi considéré par une méthode d'interpolation inverse utilisant une méthode de Moindres Carrés de sorte à répartir l'incrément de variance $\Delta_{UIVE_i}^2$ de l'IPPi suivant la relation :

$$\Delta_{UIVE_i}^2 = \sum_{k=1}^{N_{IGP}} w_k \cdot \Delta_{GIVE_k}^2$$

dans laquelle

- $N_{IGP}$ est le nombre d'IGPs de la maille de forme prédéterminée utilisés par le calcul de l'UIVDi et UIVEi de l'IPPi considéré ;
- k désigne un indice de numérotation dans la maille contenant l'IPPi des IGP de ladite maille,
- $w_k$ désignent les poids respectifs des IGPk, k variant de 1 à $N_{IGP}$, calculés par application du standard GNSS suivant une fonction du standard GNSS qui dépend de la distance entre l'IPPi et l'IGPk , la somme des poids $w_k$ étant égale à un ; puis
- pour chaque IGPk de la maille m à laquelle appartient l'IPPi considéré, mettre à jour la variance $GIVE_k$ dudit IGPk en remplaçant la valeur actuelle $\sigma_{GIVE_k}$ du GIVEk par une nouvelle valeur égale à

$$\sqrt{\sigma_{GIVE_k}^2 + \Delta_{GIVE_k}^2} \; .$$

8. Procédé de calcul optimal des variances des résidus d'un premier ensemble de points IGP d'une grille de correction ionosphérique d'une zone de service d'un système SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble,
le procédé de calcul optimal des variances des résidus des IGP comprenant les étapes consistant à :

- calculer (312) par au moins un calculateur électronique, à partir d'informations prédéterminées de correction d'erreur ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, un résidu, désigné par Res$_i$, ramené à la verticale, suivant l'équation :

$$Res_i = \frac{STEC_i - UISD_i}{F_{pp\ standard}}$$

dans lequel :

•- STECi désigne le délai ionosphérique de la ligne de vue réelle mesuré par une station d'observation et fonction de l'élévation de ladite ligne de vue;
•- UISDi désigne le délai ionosphérique vertical interpolé suivant le standard du terminal utilisateur à partir des GIVDk des IGPk de la maille entourant l'IPPi ;
.- $F_{pp\ standard}$ désigne la fonction de rabattement standard du délai ionosphérique en fonction de l'élévation de la ligne de vue,

puis le carré du résidu ;
le procédé de calcul optimal des variances des résidus des IGP étant **caractérisé en ce qu'**il comprend en outre les étapes consistant à,
pour chaque point de percement d'observation IPPi du deuxième ensemble,

. - déterminer (314) des valeurs d'incréments de variance $\Delta_{Resk}{}^2$ à attribuer respectivement aux IGPk de la maille m de l'IPPi considéré par une méthode d'interpolation inverse utilisant une méthode de Moindres Carrés dans laquelle un vecteur Yi de répartition du carré du résidu Res$_i{}^2$ de l'IPPi considéré est calculé suivant l'équation :

$$Yi = Hi^t.(Hi.Hi^t)^{-1}.Res_i{}^2$$

dans laquelle

•* H = [w$_1$ w$_2$... w$_{NIGP}$] désigne un vecteur-ligne à N$_{IGP}$ composantes pour réaliser l'interpolation de l'IPPi considéré, chaque composante w$_k$ , k variant de 1 à N$_{IGP}$ , correspondant au poids d'un IGP$_K$ obtenu avec la méthode de calcul d'interpolation directe définie par le standard pour l'IPPi considéré ;

•* $Yi = \begin{bmatrix} \Delta_{Res1}{}^2 \\ \Delta_{Res2}{}^2 \\ ... \\ \Delta_{ResNIGP}{}^2 \end{bmatrix}$ désigne un vecteur-colonne à N$_{IGP}$ composantes de la répartition du carré du

résidu Res$_i{}^2$ à répartir sur les N$_{IGP}$ IGPk lorsque la maille de l'IPPi considéré comporte N$_{IGP}$ IGP, comme résultat de la résolution de l'équation ;

•* $Res_i^2$ désigne le carré du résidu à répartir, puis

•- déterminer (316) un coefficient de pondération pi comme inverse d'un poids, ce coefficient de pondération étant représentatif de la qualité de la mesure du STECi redressé en VTECi par la division avec la fonction de rabattement de l'IPPi considéré, et exprimé suivant la formule suivante :

$$p_i = \frac{\sigma_{VTEC_i}{}^2}{\sigma_{VTEC\ NOMINAL}{}^2}$$

dans laquelle

.- $\sigma_{VTEC_i}{}^2$ désigne le bruit de mesure de la pseudo-distance mesuré par le terminal de mesure pour l'IPPi considéré, et

.- $\sigma_{VTEC_i \, NOMINAL}^2$ désigne un bruit de mesure nominal de référence du terminal de mesure ;

ensuite, après avoir calculé tous les Yi et pi correspondant au premier ensemble des points de percement IPPi observé,
pour chaque IGP, calculer (324) une variance de résidu non dilaté suivant l'équation :

$$\sigma_{MOPS} = \sqrt{\frac{1}{Ps} \times \sum_{i=1}^{Nipp} \frac{1}{p_i} \times \Delta_{Res_{ipp\,i}}^2}$$

avec :

.- Ps, la somme des poids normalisés $1/p_i$ de chaque résidu disponibles pour l'IGP considéré suivant :

$$Ps = \sum_{i=1}^{N_{ipp}} \frac{1}{p_i}$$

•- $N_{ipp}$ étant le nombre des IPP ayant généré un résidu pour l'IGP concerné,
•- $\Delta_{Res_{ipp\,i}}^2$ le résidu interpolé en inverse à l'IGP considéré pour l'IPPi faisant partie des IPP ayant généré un résidu pour l'IGP concerné.

**9.** Procédé de calcul optimal des variances des résidus d'un premier ensemble de points IGP d'une grille de correction ionosphérique d'une zone de service d'un système SBAS selon la revendication 8, dans lequel

•- le coefficient de pondération $p_i$ est modulé par l'inverse du poids $w_i$ de l'IPPi suivant l'IGP tel que défini par le standard MOPS DO-229 et s'écrit suivant l'expression : $p_i = \frac{1}{w_i} \times \frac{\sigma_{VTEC_i}^2}{\sigma_{VTEC\,NOMINAL}^2}$ , et

•- l'écart-type $\sigma_{MOPS}$ de l'IGP considéré est calculé suivant l'expression

$$\sigma_{MOPS} = \sqrt{(K.P.K^t)^{-1}.K.P.X^t}$$

dans laquelle :

•* K désigne le vecteur unitaire ligne de dimension Nipp : $K = [1\ 1\ ...1]$,

•* P désigne la matrice diagonale des poids $P = \begin{bmatrix} \frac{1}{p_1} & \cdots & 0 \\ \vdots & \ddots & \vdots \\ 0 & \cdots & \frac{1}{p_{Nipp}} \end{bmatrix}$, et

•* X désigne le vecteur colonne des résidus : $X = \begin{bmatrix} \Delta_{Res_1}^2 \\ \vdots \\ \Delta_{Res_{Nipp}}^2 \end{bmatrix}$

**10.** Procédé de calcul optimal des variances des résidus d'un premier ensemble de points IGP d'une grille de correction ionosphérique d'une zone de service d'un système SBAS selon la revendication 8, dans lequel

•- le coefficient de pondération $p_i$ est modulé par l'inverse du poids $w_{i\,center\,norm}$ de l'IPPi suivant l'IGP l'expression :

$$p_i = \frac{1}{w_{i\ center\ norm}} \times \frac{\sigma_{VTEC_i}{}^2}{\sigma_{VTEC\ NOMINAL}{}^2}$$

dans laquelle le poids $w_{i\ center\ norm}$ est calculé selon l'équation :

Si $w_i = 0$, alors l'IPP n'est pas utilisé pour le calcul du $\sigma_{MOPS}$ de l'IGP considéré

Si $0 < w_i < \dfrac{1}{N_{IGP}}$, alors $w_{i\ center\ norm} = w_i$

Sinon, $W_{i\ center\ norm} = 1 - \dfrac{w_{i\ center\ ini}}{\sum_{i=1}^{N_{IGP}} w_{i\ center\ ini}}$, $N_{IGP}$ correspondant au nombre d'IGP ayant servi dans l'interpolation du délai ionosphérique à l'IPPi et le terme $w_{i\ center\ ini}$ s'écrivant

$W_{i\ center\ ini} = \left| w_i - \dfrac{1}{N_{IGP}} \right|$, le poids $w_i$ étant défini par l la norme MOPS DO-229, et

•- l'écart-type $\sigma_{MOPS}$ de l'IGP considéré est calculé suivant l'expression

$$\sigma_{MOPS} = \sqrt{(K.P.K^t)^{-1}.K.P.X^t}$$

dans laquelle :

•- K désigne le vecteur unitaire ligne de dimension Nipp : $K = [1\ 1\ ...1]$,

•- P désigne la matrice diagonale des poids $P = \begin{bmatrix} \frac{1}{p_1} & \cdots & 0 \\ \vdots & \ddots & \vdots \\ 0 & \cdots & \frac{1}{p_{Nipp}} \end{bmatrix}$, et

•- X désigne le vecteur colonne des résidus : $X = \begin{bmatrix} \Delta_{Res\ 1}{}^2 \\ \vdots \\ \Delta_{Res_{Nipp}}{}^2 \end{bmatrix}$

**11.** Procédé de calcul optimal des variances des résidus d'un premier ensemble de points IGP d'une grille de correction ionosphérique d'une zone de service d'un système SBAS selon l'une quelconque des revendications 8 à 10, comprenant une étape supplémentaire consistant à :

•- pour chaque IGPk du deuxième ensemble, calculer (326) une variance de résidu dilaté $\sigma_{MOPS}^d$ à partir de la variance de résidu non dilaté $\sigma_{MOPS}$ suivant l'équation :

$$\sigma_{MOPS}^d = \left( \frac{t_{v_k,\alpha}}{G(p)} \right) . \sigma_{MOPS}$$

avec $d_k = \left( \dfrac{t_{v_k,\alpha}}{G(p)} \right)$ le coefficient de dilatation associé à l'IGPk, k variant de 1 à $N_{IGP}$,

$t_{v_k,\alpha}$ désignant le facteur de Student associé l'IGPk de rang k fonction de $v_k$ le degré de liberté et fonction de la probabilité de confiance $\alpha$, ledit facteur de Student $t_{v_k,\alpha}$ permettant de borner une erreur avec un niveau de confiance (1-p) prédéterminé et requis par le service SBAS, la probabilité de confiance $\alpha$ étant lié au niveau de confiance par la relation $\alpha = 1 - \dfrac{1}{2}.p$ , et le degré de liberté $v_k$ étant égal ici au nombre d'IPP ayant généré un résidu pour l'IGPk concerné moins un ; et

$G(p)$ désignant la valeur obtenue lorsque l'hypothèse gaussienne est appliquée pour la même probabilité de confiance $\alpha$, c'est à dire la limite du facteur de Student $t_{v_k,\alpha}$ lorsque le degré de liberté $v_k$ tend vers l'infini.

12. Procédé de calcul optimal simplifié des variances des résidus d'un premier ensemble de points IGP d'une grille de correction ionosphérique d'une zone de service d'un système SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble, le procédé de calcul optimal des variances des résidus des IGP comprenant les étapes consistant à :

• - calculer par au moins un calculateur électronique, à partir d'informations prédéterminées de correction d'erreur ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, un résidu, désigné par Res$_i$, ramené à la verticale, suivant l'équation :

$$\mathrm{Res}_i = \frac{\mathrm{STEC}_i - \mathrm{UISD}_i}{\mathrm{F}_{pp\,standard}}$$

dans lequel :

• - STECi désigne le délai ionosphérique de la ligne de vue réelle mesuré par une station d'observation et fonction de l'élévation de ladite ligne de vue;
• - UISDi désigne le délai ionosphérique vertical interpolé suivant le standard du terminal utilisateur à partir des GIVDk des IGPk de la maille entourant l'IPPi ;
• - $\mathrm{F}_{pp\,standard}$ désigne la fonction de rabattement standard du délai ionosphérique en fonction de l'élévation de la ligne de vue,

puis le carré du résidu ;
le procédé de calcul optimal des variances des résidus des IGP étant **caractérisé en ce qu'**il comprend en outre les étapes consistant à,
pour chaque point de percement d'observation IPPi du deuxième ensemble,

• - déterminer des valeurs d'incréments de variance $\Delta_{Resk}{}^2$ à attribuer respectivement aux IGPk de la maille m de l'IPPi considéré par une méthode d'interpolation inverse utilisant une méthode de Moindres Carrés dans laquelle un vecteur Yi de répartition du carré du résidu Res$_i{}^2$ de l'IPPi considéré est calculé suivant l'équation :

$$\mathrm{Yi} = \mathrm{Hi}^t . \left(\mathrm{Hi} . \mathrm{Hi}^t\right)^{-1} . \mathrm{Res}_i{}^2$$

dans laquelle

• * H = [w$_1$ w$_2$ ... w$_{NIGP}$] désigne un vecteur-ligne à N$_{IGP}$ composantes pour réaliser l'interpolation de l'IPPi considéré, chaque composante w$_k$, k variant de 1 à N$_{IGP}$, correspondant au poids d'un IGP$_k$ obtenu avec la méthode de calcul d'interpolation directe définie par le standard pour l'IPPi considéré ;

• * $\mathrm{Yi} = \begin{bmatrix} \Delta_{Res1}{}^2 \\ \Delta_{Res2}{}^2 \\ ... \\ \Delta_{REesNIGP}{}^2 \end{bmatrix}$ désigne un vecteur-colonne à N$_{IGP}$ composantes de la répartition du carré du

résidu Res$_i{}^2$ à répartir sur les N$_{IGP}$ IGPk lorsque la maille de l'IPPi considéré comporte N$_{IGP}$ IGP, comme résultat de la résolution de l'équation ;

• * $\mathrm{Res}_i^2$ désigne le carré du résidu à répartir, puis

• - déterminer un coefficient de pondération pi comme inverse d'un poids, ce coefficient de pondération étant représentatif de la qualité de la mesure du STECi redressé en VTECi par la division avec la fonction de rabattement de l'IPPi considéré, et exprimé suivant la formule suivante :

$$p_i = \frac{1}{w_i} \times \frac{\sigma_{VTEC_i}{}^2}{\sigma_{VTEC\ NOMINAL}{}^2}$$

dans laquelle

•- $\sigma_{VTEC_i}{}^2$ désigne le bruit de mesure de la pseudo-distance mesuré par le terminal de mesure pour l'IPPi considéré,

•- $w_i$ désigne le poids de l'IPPi suivant l'IGP tel que défini par le standard DO-229 ; et

•- $\sigma_{VTEC_i}{}^2$ désigne un bruit de mesure nominal de référence du terminal de mesure ;

ensuite, après avoir calculé tous les Yi et pi correspondant au premier ensemble des points de percement IPPi observé,

pour chaque IGP,

faire un tri des résidus calculés par la méthode d'interpolation inverse en enlevant les résidus calculés à partir des IPPi dont les qualités de mesures sont insuffisantes par rapport à un seuil de qualité prédéterminé, et garder les $N_{ipp\_fil}$ résidus calculés, puis

calculer une variance de résidu simplifié non dilaté suivant l'équation :

$$\sigma_{MOPS\_simp} = \sqrt{\frac{1}{N_{ipp\_fil}} \times \sum_{i=1}^{Nipp\_fil} \Delta_{Res_{ipp\ i}}{}^2}$$

avec :

•- $N_{ipp\_fil}$ le nombre des IPP ayant généré un résidu pour l'IGP concerné et dont la qualité de mesure est suffisante ;

•- $\Delta_{Res_{ipp\ i}}{}^2$ est le résidu interpolé en inverse à l'IGP considéré pour l'IPPi faisant partie des IPP triés ayant généré un résidu pour l'IGP concerné.

13. Procédé de calcul optimal simplifié des variances des résidus d'un premier ensemble de points IGP d'une grille de correction ionosphérique d'une zone de service d'un système SBAS selon la revendication 10, dans lequel

pour chaque IGPk du deuxième ensemble, calculer une variance de résidu simple dilaté $\sigma^d_{MOPS\_simp}$ à partir de la variance de résidu simple non dilaté $\sigma_{MOPS\_simp}$ suivant l'équation :

$$\sigma^d_{MOPS\_simp} = \left(\frac{t_{v_k,\alpha}}{G(p)}\right) \cdot \sigma_{MOPS\_simp}$$

avec $d_k = \left(\frac{t_{v_k,\alpha}}{G(p)}\right)$ associé à l'IGPk, k variant de 1 à $N_{IGP}$,

$t_{v_k,\alpha}$ désignant le facteur de Student associé l'IGPk de rang k fonction de $v_k$ le degré de liberté et fonction de la probabilité de confiance $\alpha$, ledit facteur de Student $t_{v_k,\alpha}$ permettant de borner une erreur avec un niveau de confiance (1-p) prédéterminé et requis par le service SBAS, la probabilité de confiance $\alpha$ étant lié au niveau de confiance par la relation $\alpha = 1 - \frac{1}{2} \cdot p$ , et le degré de liberté $v_k$ étant égal ici au nombre d'IPP ayant généré un résidu pour l'IGPk concerné moins un ; et

$G(p)$ désignant la valeur obtenue lorsque l'hypothèse gaussienne est appliquée pour la même probabilité de confiance $\alpha$, c'est à dire la limite du facteur de Student $t_{v_k,\alpha}$ lorsque le degré de liberté $v_k$ tend vers l'infini.

14. Procédé de calcul optimal des variances des résidus d'un premier ensemble de points IGP d'une grille de correction ionosphérique d'une zone de service d'un système SBAS selon l'une quelconque des revendications 8 à 11, dans lequel

La forme de chaque maille est une forme triangulaire et le nombre $N_{IGP}$ des IGP sommets de chaque maille et égale à 3, ou

La forme de chaque maille est la forme d'un quadrilatère, de préférence comprise parmi les formes d'un rectangle, d'un carré et d'un losange, et le nombre $N_{IGP}$ des IGP sommets de chaque maille et égale à 4.

**15.** Système SBAS d'augmentation à base de satellites pour augmenter les performances d'un système global de navigation par satellites GNSS,

le système SBAS comprenant des terminaux utilisateurs de service(s) SBAS, un ou plusieurs satellites d'augmentation des satellites du système GNSS et de diffusion de messages d'information aux terminaux utilisateurs, une ou plusieurs stations d'observation RIMS munis de récepteurs GNSS, et un ou plusieurs calculateurs,

le système SBAS étant configuré pour calculer de manière optimale des variances des résidus d'un premier ensemble de points IGP d'une grille de correction ionosphérique d'une zone de service d'un système SBAS, la grille de correction ionosphérique étant structurée en un réseau maillé de cellules de forme polygonale prédéterminée, les cellules du réseau maillé correspondant projectivement à la zone de service SBAS et ayant pour sommets des point IGP du premier ensemble,

le système SBAS étant **caractérisé en ce que** le ou les calculateurs électroniques sont configurés pour :

•- à partir d'informations prédéterminées de correction d'erreur ionosphériques des points IGP du premier ensemble, et de mesures de pseudo-distances d'un deuxième ensemble de points de percement IPP d'observation et de contrôle contenus dans les cellules de la grille ionosphérique, pour chaque point de percement d'observation IPPi du deuxième ensemble, un résidu, désigné par Res$_i$, ramené à la verticale, suivant l'équation :

$$Res_i = \frac{STEC_i - UISD_i}{F_{pp\ standard}}$$

dans lequel :

•- STECi désigne le délai ionosphérique de la ligne de vue réelle mesuré par une station d'observation et fonction de l'élévation de ladite ligne de vue;
•- UISDi désigne le délai ionosphérique vertical interpolé suivant le standard du terminal utilisateur à partir des GIVDk des IGPk de la maille entourant l'IPPi ;
•- $F_{pp\ standard}$ désigne la fonction de rabattement standard du délai ionosphérique en fonction de l'élévation de la ligne de vue,

puis calculer le carré du résidu ;
et ensuite pour chaque point de percement d'observation IPPi du deuxième ensemble,

•- déterminer des valeurs d'incréments de variance $\Delta_{Resk}^2$ à attribuer respectivement aux IGPk de la maille m de l'IPPi considéré par une méthode d'interpolation inverse utilisant une méthode de Moindres Carrés dans laquelle un vecteur Yi de répartition du carré du résidu Res$_i^2$ de l'IPPi considéré est calculé suivant l'équation :

$$Yi = Hi^t.(Hi.Hi^t)^{-1}.Res_i^2$$

dans laquelle

•* H = [w$_1$ w$_2$ ... w$_{NIGP}$] désigne un vecteur-ligne à $N_{IGP}$ composantes pour réaliser l'interpolation de l'IPPi considéré, chaque composante w$_k$, k variant de 1 à $N_{IGP}$, correspondant au poids d'un IGP$_k$ obtenu avec la méthode de calcul d'interpolation directe définie par le standard pour l'IPPi considéré ;

$$\bullet^* \ Yi = \begin{bmatrix} \Delta_{Res1}^2 \\ \Delta_{Res2}^2 \\ ... \\ \Delta_{ResNIGP}^2 \end{bmatrix}$$ désigne un vecteur-colonne à $N_{IGP}$ composantes de la répartition du carré du

résidu Res$_i^2$ à répartir sur les $N_{IGP}$ IGPk lorsque la maille de l'IPPi considéré comporte $N_{IGP}$ IGP, comme résultat de la résolution de l'équation ;

•\* $\text{Res}_i^2$ désigne le carré du résidu à répartir, puis

•- déterminer un coefficient de pondération pi comme inverse d'un poids, ce coefficient de pondération étant représentatif de la qualité de la mesure du STECi redressé en VTECi par la division avec la fonction de rabattement de l'IPPi considéré, et exprimé suivant la formule suivante :

$$p_i = \frac{\sigma_{\text{VTEC}_i}{}^2}{\sigma_{\text{VTEC NOMINAL}}{}^2}$$

dans laquelle

•- $\sigma_{\text{VTEC}_i}{}^2$ désigne le bruit de mesure de la pseudo-distance mesuré par le terminal de mesure pour l'IPPi considéré, et

•- $\sigma_{\text{VTEC}_i}{}^2$ désigne un bruit de mesure nominal de référence du terminal de mesure ;

ensuite, après avoir calculé tous les Yi et pi correspondant au premier ensemble des points de percement IPPi observé,

pour chaque IGP, calculer une variance de résidu non dilaté suivant l'équation :

$$\sigma_{\text{MOPS}} = \sqrt{\frac{1}{\text{Ps}} \times \sum_{i=1}^{\text{Nipp}} \frac{1}{p_i} \times \Delta_{\text{Res}_{\text{ipp i}}}{}^2}$$

avec :

•- Ps, la somme des poids normalisés $1/p_i$ de chaque résidu disponibles pour l'IGP considéré suivant :

$$\text{Ps} = \sum_{i=1}^{N_{\text{ipp}}} \frac{1}{p_i}$$

•- $N_{\text{ipp}}$ étant le nombre des IPP ayant généré un résidu pour l'IGP concerné,

•- $\Delta_{\text{Res}_{\text{ipp i}}}{}^2$ le résidu interpolé en inverse à l'IGP considéré pour l'IPPi faisant partie des IPP ayant généré un résidu pour l'IGP concerné.

Epaisseur réelle
de l'ionosphère

Couche fine à 350 km du
modèle ionosphérique

14

2

IPP

8

14

4

Ligne
de vue

Elévation

El

10

12

FIG.1

FIG.2

Epaisseur réelle
de l'ionosphère

Couche fine à 350 km du
modèle ionosphérique

30

26

IPP

14

12

C1

P2

28

Elévation

El

32

34

RIMS

24

22

FIG.3

FIG.4

FIG.5

CELLULES CONSIDEREES

FIG.6

EP 3 343 247 A1

FIG.7

FIG.8

FIG.9

EP 3 343 247 A1

FIG.10

302

306

332

304

m + 1 → m

Dernière
cellule ?

non

310

320

308

oui

312

Tous les
IPP$_i$ de la
cellule
testés ?

non

non

318

309

314

316

j + 1 → j

324

Fin

Tous les
IGP$_j$
parcourus ?

326

## FIG.11

FIG.12

Europäisches
Patentamt

European
Patent Office

Office européen
des brevets

**RAPPORT DE RECHERCHE EUROPEENNE**

Numéro de la demande

EP 17 20 5745

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 99/18677 A1 (AIRSYS ATM INC [US]; HUNDLEY THOMAS WARREN [US]; ROWSON STEPHEN V [US]) 15 avril 1999 (1999-04-15) * pages 27-71; figures 12-19 * ----- | 1-15 | INV. G01S19/07 |
| A | CONKER ROBERT S ET AL: "DESCRIPTION AND ASSESSMENT OF REAL-TIME ALGORITHMS TO ESTIMATE THE IONOSPHERIC ERROR BOUNDS FOR WAAS", NAVIGATION: JOURNAL OF THE INSTITUTE OF NAVIGATION, INSTITUTE OF NAVIGATION, FAIRFAX, VA, US, vol. 44, no. 1, 1 juin 1997 (1997-06-01), pages 77-88, XP056013253, ISSN: 0028-1522 * le document en entier * ----- | 1-15 | |
| A | SPARKS L ET AL: "Kriging as a Means of Improving WAAS Availability", GNSS 2010 - PROCEEDINGS OF THE 23RD INTERNATIONAL TECHNICAL MEETING OF THE SATELLITE DIVISION OF THE INSTITUTE OF NAVIGATION (ION GNSS 2010), THE INSTITUTE OF NAVIGATION, 8551 RIXLEW LANE SUITE 360 MANASSAS, VA 20109, USA, 24 septembre 2010 (2010-09-24), pages 2013-2020, XP056000308, * le document en entier * ----- -/-- | 1-15 | DOMAINES TECHNIQUES RECHERCHES (IPC) G01S |

Le présent rapport a été établi pour toutes les revendications

| Lieu de la recherche | Date d'achèvement de la recherche | Examinateur |
|---|---|---|
| Munich | 18 avril 2018 | Ribbe, Jonas |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

   .................................................................

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 17 20 5745

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WANNER BILL ET AL: "Wide Area Augmentation System Vertical Accuracy Assessment In Support of LPV200 Requirements", NAVIGATION: JOURNAL OF THE INSTITUTE OF NAVIGATION, INSTITUTE OF NAVIGATION, FAIRFAX, VA, US, vol. 55, no. 3, 1 décembre 2008 (2008-12-01), pages 191-203, XP056013532, ISSN: 0028-1522 * le document en entier * ----- | 1-15 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 18 avril 2018 | Ribbe, Jonas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 2 de 2

**ANNEXE AU RAPPORT DE RECHERCHE EUROPEENNE**
**RELATIF A LA DEMANDE DE BREVET EUROPEEN NO.**

EP 17 20 5745

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-04-2018

| Document brevet cité au rapport de recherche | | Date de publication | Membre(s) de la famille de brevet(s) | | Date de publication |
|---|---|---|---|---|---|
| WO 9918677 | A1 | 15-04-1999 | AU | 1900199 A | 27-04-1999 |
| | | | WO | 9918677 A1 | 15-04-1999 |

EPO FORM P0460

Pour tout renseignement concernant cette annexe : voir Journal Officiel de l'Office européen des brevets, No.12/82